(19) Europäisches Patentamt European Patent Office Office européen des brevets

(11) **EP 4 550 593 A1**

(12) **EUROPEAN PATENT APPLICATION**
published in accordance with Art. 153(4) EPC

(43) Date of publication:
07.05.2025 Bulletin 2025/19

(21) Application number: 23830937.1

(22) Date of filing: 30.05.2023

(51) International Patent Classification (IPC):
H01S 1/06 (2006.01)  G04F 5/14 (2006.01)
H01S 3/00 (2006.01)

(52) Cooperative Patent Classification (CPC):
G04F 5/14; H01S 1/06; H01S 3/00

(86) International application number:
PCT/JP2023/020033

(87) International publication number:
WO 2024/004487 (04.01.2024 Gazette 2024/01)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 28.06.2022 JP 2022103819
19.07.2022 JP 2022114807

(71) Applicants:
• RIKEN
Wako-shi, Saitama 351-0198 (JP)

• JEOL Ltd.
Akishima-shi, Tokyo 196-8558 (JP)

(72) Inventors:
• KATORI Hidetoshi
Wako-shi, Saitama 351-0198 (JP)
• TAKAMOTO Masao
Wako-shi, Saitama 351-0198 (JP)
• TSUJI Shigenori
Akishima-shi, Tokyo 196-8558 (JP)

(74) Representative: Boult Wade Tennant LLP
Salisbury Square House
8 Salisbury Square
London EC4Y 8AP (GB)

(54) **COLD ATOM GENERATION DEVICE, COLD ATOM GENERATION METHOD, PHYSICAL PACKAGE, PHYSICAL PACKAGE FOR OPTICAL LATTICE CLOCK, PHYSICAL PACKAGE FOR ATOMIC CLOCK, PHYSICAL PACKAGE FOR ATOM INTERFEROMETER, PHYSICAL PACKAGE FOR QUANTUM INFORMATION PROCESSING DEVICE, AND PHYSICAL PACKAGE SYSTEM**

(57) According to the present invention, in a first region that traps atoms in a first state by means of first light and a magnetic field, atoms are optically pumped into a second state and thereby trapped by magnetic force. The atoms in the second state trapped in the first region are moved from the first region to a second region by means of force of gravity or the radiation pressure from second light. In the second region, the second light is radiated on the atoms in the second state, and the atoms in the second state are thereby cooled. The atoms are optically pumped into a third state that is insensitive to magnetic fields and thereby released from a magnetic trap and transported to a post device by means of a moving optical lattice or an optical dipole guide.

FIG. 5

## Description

TECHNICAL FIELD

The present disclosure relates to a cold atom generation apparatus, a cold atom generating method, a physics package, a physics package for an optical lattice clock, a physics package for an atomic clock, a physics package for an atomic interferometer, a physics package for a quantum information processing device, and a physics package system.

BACKGROUND

An optical lattice clock is an atomic clock which was proposed in the year 2001 by Hidetoshi Katori, one of the inventors of the present disclosure. In the optical lattice clock, an atomic cloud is entrapped within an optical lattice formed by a laser beam, and a resonance frequency of a visible light region is measured. Because of this, the optical lattice clock enables measurement with a precision of 18 digits, far exceeding precision of cesium clocks which are presently available. Optical lattice clocks are now eagerly being researched and developed by the group of the present inventors, and also by various groups in and out of Japan, and are now emerging as next-generation atomic clocks.

As recent techniques for the optical lattice clock, for example, Patent Documents 1 to 3 described below may be exemplified. Patent Document 1 describes that a one-dimensional moving optical lattice is formed inside an optical waveguide having a hollow passageway. Patent Document 2 describes a configuration in which an effective magic frequency is set. In fact, a magic wavelength is theoretically and experimentally determined for each of strontium, ytterbium, mercury, cadmium, magnesium, and the like. Patent Document 3 describes a radiation shield which reduces influences from black body radiation emanating from the walls at the periphery.

In the optical lattice clock, in order to perform time measurement with high precision, an altitude difference of 1 cm on the earth based on a general relativity effect due to the force of gravity can be detected as a deviation of progression of time. Thus, if the optical lattice clock can be made smaller and portable so that the optical lattice clock may be used in fields outside of a research laboratory, application possibilities can be widened for new geodetic techniques such as search for underground resources, underground openings, detection of magma reservoirs, and the like. By producing the optical lattice clocks on a massive scale and placing them in various places to continuously monitor a variation in time of the gravity potential, applications may be enabled such as detection of crustal movement and spatial mapping of a gravitational field. In this manner, optical lattice clocks are expected to contribute to society as a new fundamental technology, beyond a frame of highly precise time measurement.

CITATION LIST

PATENT LITERATURE

Patent Document 1: JP 6206973 B
Patent Document 2: JP 6635608 B
Patent Document 3: JP 7189588 B

SUMMARY

TECHNICAL PROBLEM

In devices such as atomic clocks and atomic interferometers, zero-dead-time interrogation of atoms continuously loaded from a cold atom source has the advantage of improving the instability and sensitivity. steps depending on the quantum state of the atoms must be achieved step by step, conventional time-sequential schemes, in which the trapped atoms do not flow, are incompatible with the continuous loading of cold atoms into the post-stage.

An advantage of the present disclosure lies in enabling continuous cooling of atoms and continuous supply of the cooled atoms to a downstream apparatus.

SOLUTION TO PROBLEM

According to one aspect of the present disclosure, there is provided a cold atom generation apparatus comprising: a first cooling means that cools and traps, with a first light and a magnetic field, atoms in a first state in a first region; a magnetic trap means that traps, with a magnetic force, atoms relaxed to a second state by optical pumping; a second cooling means that irradiates with a second light onto the atoms in the second state moved from the first region to a second region, to thereby cool the atoms in the second state; and a supply means that optically pumps, in the second region, the atoms to a third state, insensitive to a magnetic field, and supplies the atoms to a post stage by a moving optical lattice or an optical dipole guide. Here atoms in the second state correspond to atoms in the low-field-seeking state, i.e. whose the total orbital angular momentum J is greater than zero, whose the magnetic quantum number $m_J$ for which the Zeeman energy increases with the magnetic field.

In the above-described structure, the atoms in the first state are cooled and trapped in the first region, and the atoms decayed to the second state by optical pumping are magnetically trapped, and moved to the second region different from the first region. In the second region, the second light is irradiated the atoms in the second state, so that the atoms are cooled. In this manner, by performing the trapping and the cooling of the atoms at separate states and separate locations, the trapping and the cooling of the atoms can be continuously performed. As a result, it becomes possible to continuously cool the atoms and continuously supply the cold atoms to the post-stage. The magnetic field is, for example, a quadrupole magnetic field. The atoms in the first state are trapped at or near a position where the quadrupole magnetic field is zero. The atoms optically pumped to the second state, sensitive to the magnetic field, are confined in the quadrupole magnetic trap. In the second region which does not include a position where the quadrupole magnetic field is zero (that is, away from the first region), the atoms are cooled by the second light (for example, laser beams for narrow-linewidth cooling).

Here, three orthogonal axes are defined. To move atoms from the first region to the second region, magnetic trap means may generate the magnetic field distribution so that the magnetic field gradient in one axial direction is smaller than the magnetic field gradient in the other two axial directions.

The direction of the one axis may be a direction in which a force of gravity acts, and the second region may be a region where the magnetic force, the force of gravity, and a radiation pressure of the second light are balanced.

The direction of the one axis may be a direction in which a force of gravity does not act, and the second region may be a region where the magnetic force and a radiation pressure of the second light are balanced.

The direction of the one axis may be a direction in which a radiation pressure of the second light acts, and the second region may be a position where the magnetic force and the radiation pressure of the second light are balanced.

The magnetic trap means may use coils and permanent magnets to form said magnetic field distribution. The magnetic trap means may use permanent magnets to form said magnetic field distribution in first region.

The magnetic trap means may form said magnetic field distribution by combining a two-dimensional quadrupole magnetic field in a plane defined by said two axes generated by permanent magnets with a magnetic field in one of said axes generated by coils.

The atoms may be strontium atoms, and an energy level of the atoms in the second state may be the $^3P_2$ level. Alternatively, the atoms may be calcium (Ca) atoms, or ytterbium (Y) atoms.

The first light may be a laser beam having a wavelength of 461 nm, and the first state may be the $5s^2\ {}^1S_0$ state.

The second light may be a laser beam having a wavelength of 2.9 $\mu$m, and the second state may be the $5s5p\ {}^3P_2$ state.

The coils and the permanent magnets may form said magnetic field distribution satisfying the following conditions: generating the quadrupole magnetic field centered on the zero field position in the first region so that the atoms in the first state are trapped in magneto-optical trap by the first cooling means; generating the magnetic field in the second region so that the magnetic force acting on the atoms in the second state is balanced by the sum of the gravitational force and the radiation pressure of the second light; and generating a finite magnetic field in the second region so that the atoms in the second state are confined in the magnetic trap while avoiding the Majonara flip.

The first region and the second region may be sufficiently spatially separated from each other. The second region and the downstream apparatus may be sufficiently spatially separated from each other. The first region, the second region and the post device need not be aligned on the same line. An element which blocks light (for example, a light-shielding wall such as a wall through which light does not transmit) may be provided between the first region and the post device as necessary. Although the problem often arises that spontaneously emitted fluorescence from the magneto-optical trapping cause a unintended light shift of the clock transition in the post devices of atomic interferometers and atomic clocks, the unintended light shift can be suppressed by blocking a straight path between the post device and the first region where magneto optical trap is located.

In order to spatially separate the first region and the post device from each other, two moving optical lattices crossed at a non-zero angle at the intersection may be utilized. Here, one moving optical lattice passes through the second region, and the other moving optical lattice passes through the post device. The former is called a first moving optical lattice, and the latter is called a second moving optical lattice.

In the second region, the atoms are optically pumped to the third state, insensitive to the magnetic field, and are trapped in the first moving optical lattice. The atoms are guided to the intersection by the first moving optical lattice. At the intersection, the atoms or the part of atoms are transported from the first moving optical lattice to the second moving optical lattice. The atoms are guided to the post device by the second moving optical lattice. As a result, the first region is spatially separated from the post device, suppressing spontaneously emitted fluorescence from the first region to reach up to the post device. The moving optical lattice may be formed by a bow-tie cavity. A series of a plurality of moving optical lattice are optically crossed from the second region to the post device via intersections.

The cold atom generation apparatus may further include a light-shielding wall that blocks the optical path from the first region to the post device. The light-shielding wall suppress the spontaneously emitted fluorescence from the first region to reach up to the post device.

According to another aspect of the present disclosure, there is provided a cold atom generation apparatus comprising: a first cooling means that cools and traps, with a first light and a magnetic field, atoms in a first state in a first region; a means that the atoms trapped in the first region relax to the second state by an optical pumping in the laser cooling; a means of transporting the atoms to a second region where the magnetic field is non-zero and the following three forces acting on the atoms are in equilibrium: the magnetic force, force of gravity and a radiation pressure force from a second light; a second cooling means that irradiates the atoms in the second state with the second light in the second region, to thereby cool the atoms in the second state; a means that optically pumps the atoms to a third state, insensitive to a magnetic field, in the second region; and a means that transports the atoms in the third state from the second region to a post device by a moving optical lattice or an optical dipole guide, The atoms in the first state loaded in the first region are cooled by the first cooling means and are pumped into the second state. The atoms in the second state are moved from the first region to the second region by the balanced three forces of the magnetic force, the force of gravity and the radiation pressure force with the second light. The atoms in the second region are cooled by the second cooling means, and are optically pumped into the third state. The atoms in the third state are loaded into the moving optical lattice or the optical dipole guide, and transported from the second region to the post device.

According to another aspect of the present disclosure, there is provided a method of generating cold atoms, the method comprising: a first cooling step of cooling and trapping, with a first light and a magnetic field, atoms in a first state in a first region; a magnetic trap step of trapping, with a magnetic force, atoms optically pumped to a second state; a step of moving the atoms from the first region to a second region; a second cooling step of irradiating a second light onto the atoms in the second state, to thereby cool the atoms in the second state; and a supply step of optically pumping the atoms to a third state, insensitive to a magnetic field, in the second region, and transporting the atoms to a post device by a moving optical lattice or an optical dipole guide.

Three orthogonal axes are defined. To move atoms from the first region to the second region by the force of gravity and the radiation pressure force from the second light, magnetic trap means may generate the magnetic field distribution so that the magnetic field gradient in one axial direction is smaller than the magnetic field gradient in the other two axial directions..

According to another aspect of the present disclosure, there is provided a physics package comprising: the cold atom generation apparatus; and a vacuum chamber surrounding a clock transition space in which atoms are placed.

According to another aspect of the present disclosure, there is provided a physics package for an optical lattice clock, comprising the physics package.

According to another aspect of the present disclosure, there is provided a physics package for an atomic clock, comprising the physics package.

According to another aspect of the present disclosure, there is provided a physics package for an atomic interferometer, comprising the physics package.

According to another aspect of the present disclosure, there is provided a physics package for a quantum information processing device for atoms or ionized atoms, comprising the physics package.

According to another aspect of the present disclosure, there is provided a physics package system comprising: the physics package; and a control apparatus that controls an operation of the physics package.

ADVANTAGEOUS EFFECTS

According to an aspect of the present disclosure, atoms can be continuously cooled and continuously supplied to a post device.

BRIEF DESCRIPTION OF DRAWINGS

FIG. 1 is a diagram showing an energy level of a strontium atom.
FIG. 2 is a diagram showing a method of generating cold atoms according to a first embodiment of the present disclosure.
FIG. 3 is a diagram showing a method of generating cold atoms according to a second embodiment of the present disclosure.
FIG. 4 is a perspective diagram showing a cold atom generation apparatus according to the first embodiment of the present disclosure.

FIG. 5 is a perspective diagram showing a magneto-optical trap apparatus (MOT apparatus) according to the first embodiment of the present disclosure.

FIG. 6 is a diagram showing the magneto-optical trap apparatus according to the first embodiment of the present disclosure, viewed from a -Z direction.

FIG. 7 is a diagram showing the magneto-optical trap apparatus according to the first embodiment of the present disclosure, viewed from a Y direction.

FIG. 8 is a diagram showing a trapped atom and a calculation result of magnetic field components in respective directions.

FIG. 9A is a diagram showing a structure according to a first alternative configuration of the present disclosure.

FIG. 9B is a diagram showing a structure according to a second alternative configuration of the present disclosure.

FIG. 9C is a diagram showing a structure according to a third alternative configuration of the present disclosure.

FIG. 9D is a diagram showing a structure according to a fourth alternative configuration of the present disclosure.

FIG. 9E is a diagram showing the structure according to the fourth alternative configuration of the present disclosure.

FIG. 9F is a diagram showing the structure according to the fourth alternative configuration of the present disclosure.

FIG. 9G is a diagram showing a structure according to a fifth alternative configuration of the present disclosure.

FIG. 9H is a diagram showing the structure according to the fifth alternative configuration of the present disclosure.

FIG. 10 is a perspective diagram showing a cold atom generation apparatus according to the second embodiment of the present disclosure.

FIG. 11 is a diagram showing permanent magnets according to the second embodiment of the present disclosure, viewed from the Y direction.

FIG. 12 is a diagram showing a distribution of a magnetic field formed in the Y direction in the second embodiment of the present disclosure.

FIG. 13 is a diagram showing distributions of magnetic fields and distributions of magnetic field gradients.

FIG. 14 is a perspective diagram showing a cold atom generation apparatus according to a sixth alternative configuration of the present disclosure.

FIG. 15 is a diagram showing a structure according to a seventh alternative configuration of the present disclosure.

FIG. 16 is a diagram showing a cold atom generation apparatus.

FIG. 17 is a diagram showing a cold atom generation apparatus according to an eighth alternative configuration of the present disclosure.

FIG. 18 is a diagram showing a cold atom generation apparatus according to a ninth alternative configuration of the present disclosure.

FIG. 19 is a block diagram showing an overall structure of an optical lattice clock.

DESCRIPTION OF EMBODIMENTS

A cold atom generation apparatus and a method of generating cold atoms according to embodiments of the present disclosure will now be described. The cold atom generation apparatus according to the embodiments of the present disclosure is an apparatus which continuously cools atoms and continuously transports the cold atoms to a post device. In the following, principles of the embodiments will be described first, and then apparatuses for realizing the principles will be described.

The continuous measurement operation is largely divided into three processes, where the processes are performed in the order of the first process, the second process, and the third process. The first process is a process to generate atomic beam from solid atoms. The third process is a process to measure a physical quantity using cold atoms. For example, the third process corresponds to the processes precisely measuring physical quantities in devices such as an atomic clock, an atomic interferometer, or another quantum measurement device. Specific examples of the device used in the third process are a longitudinal Ramsey spectroscopy device (Hidetoshi Katori, "Longitudinal Ramsey spectroscopy of atoms for continuous operation of optical clocks", Applied Physics Express 14, 072006 (2021)), an optical lattice clock (JP 6206973 B), and an atom chip used in a quantum measurement device or the like. The devices used in the third process are not limited to these devices. The devices used in the third process will hereinafter be referred to as a "post device".

The second process is intermediate between the first and second processes, including a cooling process to cool the atomic beam ejected from the first process down to an ultra-low temperature compatible with the third process, and a loading process to load the cold atoms into the post device.

In device such as the atomic clock and the atomic interferometer, in order to eliminate the Doppler shift during the interrogation process, the atomic beam need to be cooled down to ultra-low temperatures in advance. The process for achieving this is the above-described cooling process. The cold atoms are trapped in space to prevent from diffusing. Some applied forces to impart momentum to the cold atoms, and a guide to direct the cold atoms towards the post device are required.

Applied forces that can impart finite momentum to a neutral atom of an alkaline earth metal are: force of gravity (if the atom has a finite mass ), magnetic force (if the atom has a finite magnetic moment ), laser radiation pressure (used for laser cooling, magneto-optical trap (MOT) or moving molasses). Gravity and the magnetic force are described below.

In an alkaline earth metal atom having two electrons in an outermost shell, the ground state is a spin singlet, and an angular momentum is zero. The magnetic force as the applied force to impart momentum is not available to the atom in this ground state. However, it is available to the atoms in the $^3P_2$ triplet state, which are optically pumped during the laser cooling process. In the following, this method will be described exemplifying strontium atoms, but the method may alternatively be applied to magnesium atoms, calcium atoms, and ytterbium atoms.

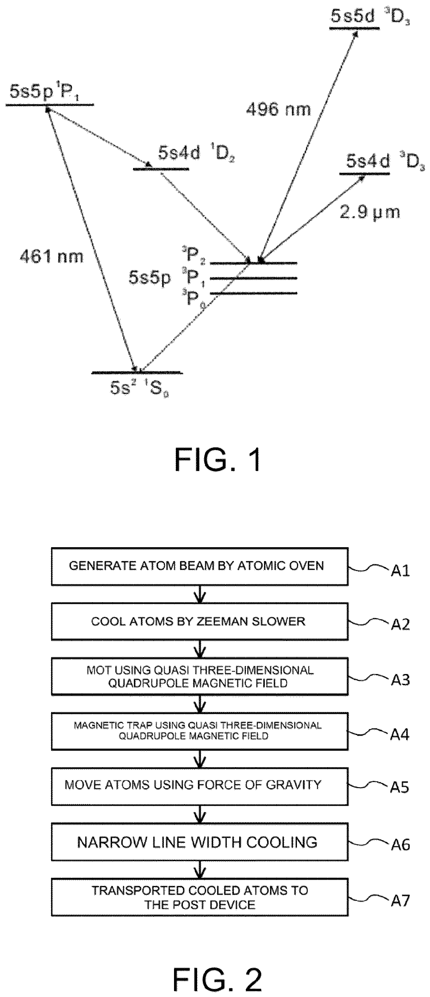

FIG. 1 shows an energy level of the strontium atom. It is known from research using strontium atoms (Masami Yasuda and Hidetoshi Katori, "Lifetime Measurement of the 3P2 Metastable State of Strontium Atoms", Phys. Rev. Lett. 92. 153004-Published 15 April 2004) that the lifetime of atoms in the $^3P_2$ state is sufficiently long, and from other research using strontium atoms (S. B. Nagel, C. E. Simien, S. Laha, P. Gupta, V. S. Ashoka, and T. C. Killian, "Magnetic trapping of metastable 3P2 atomic strontium", PHYSICAL REVIEW A 67, 011401, 2003) that atoms can be trapped by a magnetic force. Therefore, atoms in the $^3P_2$ state, which is a metastable state with long lifetime, can be moved with the force of gravity and the magnetic force.

In order to load the cold atoms into the post device, it is effective to increase the number of cold atoms in the $^3P_2$ state as much as possible, by laser cooling process.

One of the methods used to increase the number of atoms in the $^3P_2$ state is the use of magneto-optical traps operated simultaneously on 1S0 - 1P1 transition, corresponding to an energy difference of the wavelength of 461 nm, and on $^3P_2$-$^3D_3$ transition for atoms relaxed to the $^3P_2$ state, corresponding to an energy difference of the wavelength of 496 nm.

In addition, a configuration may be considered in which, in order to enable more efficient measurement in the third process, Doppler cooling on $^3P_2$ - $^3D_3$ transition corresponding to an energy difference of the wavelength of 2.9 μm is performed, to further cool the atoms in the $^3P_2$ state. The natural linewidth of this transition at 2.9 um is very narrow at 57 kHz, capable of cooling down to ultra-low temperature of a few micro Kelvin can be achieved (Tomoya Akatsuka, Koji Hashiguchi, Tadahiro Takahashi, Noriaki Ohmae, Masao Takamoto, and Hidetoshi Katori, "Three-stage laser cooling of Sr atoms using the 5s5p 3P2 metastable state below Doppler temperatures", PHYSICAL REVIEW A 103, 023331 (2001)). The atomic temperature achieved in Doppler cooling is represented by the following formula (1) as the Doppler temperature.

[Formula (1)]

$$T = \frac{\hbar \gamma}{2k_B} \quad \cdot \cdot \cdot (1)$$

wherein $\gamma$ represents a natural linewidth and $\hbar$ represents the Planck constant.

Specific techniques (first and second embodiments of the present disclosure) for continuously generating cold atoms and continuously transporting the atom gas to the post device will now be described exemplifying the alkaline earth metal atom.

FIG. 2 shows a method of generating cold atoms according to the first embodiment of the present disclosure. In the first embodiment, the following processes A0 to A7 are performed:

A0: a solid sample of alkaline earth metal atoms is prepared;
A1: an atom beam is generated from the solid sample by an atomic oven;
A2: the atoms in the $^1S_0$ state are cooled by a Zeeman slower;
A3: a magneto-optical trap (MOT) of atoms in the $^1S_0$ state using a quasi three-dimensional quadrupole magnetic field;
A4: a magnetic trap of the atoms in the $^3P_2$ state using a quasi three-dimensional quadrupole magnetic field;
A5: atoms in the $^3P_2$ state are moved to a position where a magnetic force and the force of gravity or the radiation pressure are in equilibrium;
A6: narrow line width cooling of the atoms in the $^3P_2$ state; and
A7: the cold atoms are optically pumped to a third state, insensitive to a magnetic field, and transported to the post device by a moving optical lattice or an optical dipole guide.

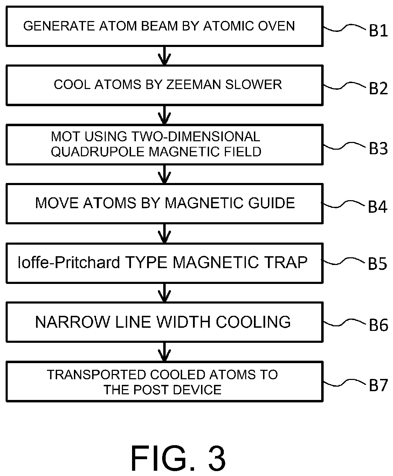

FIG. 3 shows a method of generating cold atoms according to the second embodiment of the present disclosure. In the second embodiment, the following processes B0 to B7 are performed:

B0: a solid sample of alkaline earth metal atoms is prepared;
B1: an atom beam is generated from the solid sample by an atomic oven;

B2: the atoms in the $^1S_0$ state are cooled by a Zeeman slower;

B3: a magneto-optical trap (MOT) using a two-dimensional quadrupole magnetic field;

B4: atoms in $^3P_2$ state are moved on a magnetic guide by the force of gravity or the radiation pressure;

B5: Ioffe-Pritchard type magnetic trap with respect to the atoms in the $^3P_2$ state;

B6: narrow line width cooling with respect to the atoms in the $^3P_2$ state; and

B7: the cold atoms are optically pumped to a third state, insensitive to a magnetic field, and transported to the post device by a moving optical lattice or an optical dipole guide.

<Principle of First Embodiment>

A principle of the first embodiment of the present disclosure will now be described exemplifying strontium atoms ($^{88}$Sr). Here, a three-dimensional coordinate system {X, Y, Z} is defined. An X axis, a Y axis, and a Z axis are axes which are mutually orthogonal. A similar manipulation is possible for other even isotopes (for example, $^{86}$Sr) or odd isotopes having a nuclear spin ($^{87}$Sr).

The quasi three-dimensional quadrupole magnetic field shown in A3 has a magnetic field distribution in which a magnetic field gradient in a direction of one axis is weaker than magnetic field gradients in directions of two axes other than the one axis. The quasi three-dimensional quadrupole magnetic field has a magnetic field distribution represented by the following formula.

$B = \{X\ G_X, Y\ G_Y, Z\ G_Z\}\ (a_{aniso} = |\ G_Y - G_X\ |\ /\ |\ G_Z\ |\ \sim 1, |\ G_Y\ | \ll |\ G_X\ | < |\ G_Z\ |\ )$

$\{G_X, G_Y, G_Z\}$ represents a magnetic field gradient around a zero magnetic field position. In the above-described example, the magnetic field gradient in the Y axis direction is smaller than the magnetic field gradients in the X axis and Z axis directions, and a magnetic force in the Y axis direction, (Fy = $-\partial U/\partial Y$), is weaker than magnetic forces in the X axis and Z axis directions.

In A3, atoms interacting with the quasi-triple quadrupole magnetic field and the laser beam at 461 nm, resonant with the transition from $^1S_0$ state to $^1P_1$ state are subjected to a restoring force that trap at the origin near the zero field position. Further, by a process of an optical pump which relaxes the atoms from the $^1P_1$ state via the $^1D_2$ state to the $^3P_2$ state during the laser cooling described above, atoms in the metastable $^3P_2$ state, are generated.

In A4, of the atoms in the $^3P_2$ ($m_J$=2) or the $^3P_2$ ($m_J$=1) state, which are in the low-field seeking state are magnetically trapped near the zero magnetic field position of the quasi three-dimensional quadrupole magnetic field. A magnetic interaction potential $U_{mag}$ for the atoms from the quasi three-dimensional quadrupole magnetic field is represented by following formula (2) near the zero magnetic field position.

[Formula (2)]

$$\text{Umag} = g\,\mu_B m_J G z \sqrt{\frac{(1 + a_{aniso})^2\,X^2}{4} + \frac{(1 - a_{aniso})^2\,Y^2}{4} + Z^2}$$

$$\cdots (2)$$

where g is a g factor (g = 3/2 for the $^3P_2$ state), and $\mu_B$ is a Bohr magneton.

A magnetic force $F_{mag}$ acting on the atoms is represented by following formula (3).

[Formula (3)]

$$\overrightarrow{F_{mag}} = -\nabla U_{mag}$$

$$\cdots (3)$$

In A5, the force of gravity (F = mg$_0$) acts on the atoms in a -Y direction. Here, m represents a mass of the atom, and g$_0$ represents a gravitational acceleration. When the force of gravity is larger in comparison to the Y component of $F_{mag}$ at the zero magnetic field position, the atoms move in the -Y direction (that is, the direction in which the force of gravity acts) from the zero magnetic field position, due to the force of gravity.

In A5, a radiation pressure ($F_{Rad}$) due to the second light acts on the atoms in the Y direction. When the radiation pressure is larger in comparison to the Y component of $F_{mag}$ at the zero magnetic field position, the atoms are moved in the -Y direction (that is, the direction of propagation of the second light) from the zero magnetic field position due to the radiation pressure.

In A6, the Dopper cooling is operated to irradiate atoms with a laser beam at 2.9 um, resonate with $^3P_2$-$^3D_3$ transition.. The cold atoms are trapped at a position where the Y component of $F_{mag}$, the force of gravity mg, and the radiation pressure ($F_{Rad}$) are in equilibrium.

In A7, the cold atoms are optically pumped to a third state, which is insensitive to the magnetic field, and guided into the input part of the post device (the position where the cooled atoms are input) by utilizing the optical dipole guide from the position at which the cold atoms are trapped in A6 to the post device. For example, the cold atoms may be transported from the trapped position to the input part of the post device using a moving optical lattice technique (JP 2019-129166 A). The third state may be the $^3P_2$ state, the $^3P_0$ state, or the $^1S_0$ state having a magnetic quantum number $m_J$ of 0 ($m_J$ = 0).

In the case of the 88Sr atoms in the $^3P_2$($m_J$=2) state, the force of gravity with the gravitational acceleration g0 of 9.8 m/s is balanced by the magnetic force with a magnetic field gradient of 5.2 G/cm. That is, the magnetic field gradients should be less than 5.2 G/cm in the region from the zero magnetic field position to the magnetic trap position in order for cold atoms to be moved along the -Y axis by the force of gravity from the zero magnetic field position to the magnetic trap position ( where the force of gravity, the magnetic force, and the radiation pressure from the second light are in equilibrium).On the other hand, the magnetic field gradient suitable for atoms in the $^1S_0$ state in the magneto-optical trap and for the atoms in the $^3P_2$ state in the magnetic trap is in the range of 30 - 100 G/cm. A highly anisotropic quasi-three-dimensional quadrupole magnetic field is compatible with these conditions.

The quasi three-dimensional quadrupole magnetic field with high anisotropy can be realized, for example, by a combination of a bar-shaped permanent magnet and a coil. A magnetization direction of the permanent magnet is a direction from the permanent magnet toward the coil. When a height H (direction of magnetization), a width W, and a length L of the permanent magnet are defined, a permanent magnet having a relationship of L >> H, W is used. As an example, L=50 mm and W=H=2 mm, but these values are merely exemplary.

The quadrupole magnetic field with high anisotropy is realized, for example, by a combination of a bar-shaped permanent magnet and a ring magnet.

Because the permanent magnet or the coil is placed in a region where the magneto-optical trap is realized, the permanent magnet or the coil is placed so as to not interfere with the laser beams (more specifically, laser beams illuminated from six directions) for realizing the magneto-optical trap. For example, when the bar-shaped permanent magnet is placed, there is employed an annular coil or a ring-shaped permanent magnet in which a hole for allowing the laser beam to pass is formed.

<Principle of Second Embodiment>

A principle of the second embodiment of the present disclosure will now be described exemplifying strontium atoms ($^{88}$Sr). A similar manipulation is possible for strontium atoms ($^{87}$Sr).

In B2, atomic beam emitted from the atomic beam oven along the Y axis are decelerated and cooled applied by a radiation pressure using the laser beam and the magnetic field.

In B3 to B5, first, atoms enter a region in which a two-dimensional quadrupole magnetic field,

$$\vec{B} = G\ \{X, 0, -Z\}$$

wherein G is a constant, a leaking magnetic field of a Zeeman magnetic field, and a magnetic field of Y component generated by a stopping coil or the like,

$$\vec{B} = \{0, f(Y), 0\}$$

are formed. The function f(y) monotonically decreases from the Zeeman slowing region of B2 to the magnetic trap position in B5, is the minimum at the magnetic trap position, and increases beyond the magnetic trap position.

In B3, atoms interacting with the two-dimensional quadrupole magnetic field and the laser beam at 461 nm, resonant with the $^1S_0$ - $^1P_1$ transition, are subjected to a restoring force that strongly confines on the central axis of the atomic beam(Y-axis). Two pairs of counter-propagating laser beams irradiate along the X and the Z axes. In addition, one pair of counter-propagating laser beams may irradiate so as to exert the radiation pressure on cold atoms along the Y axis through the optical molasses.

The atoms in the $^3P_2$ state are created to be relaxed from the $^1P_1$ state via the $^1D_2$ state. The atoms in the $^3P_2$ ($m_J$=1) or $^3P_2$($m_J$=2) are magnetically confined near the zero magnetic field in the two-dimensional quadrupole magnetic field. A magnetic interaction potential U between the atoms and the two-dimensional quadrupole magnetic field is proportional to |B|. The magnetic force $F_{mag}$ acting on the atoms is represented by following formula (4).
[Formula (4)]

$$\vec{F}_{mag} = -\nabla U$$

$$\cdots (4)$$

In B3 to B5, strong magnetic forces are applied in the radial direction (X and Z directions) to confine the atoms on the central axis of the atomic beam. A small bias magnetic field is applied on the Y axis, to suppress the Majonara flip and weakly confine the atoms on the Y axis by the magnetic force. Because the atoms in the $^3P_2(m_J=1)$ or $^3P_2(m_J=2)$ state are low-field seeker, the atoms are guided in the Y direction by the magnetic force, and are moved to a position of a minimum magnetic field.

In B6, the laser beam at 2.9 $\mu$m, resonant with $^3P_2$-$^3D_3$ transition is irradiated to the position where the atoms are trapped, so as to operate Doppler cooling. The atoms cooled by the Doppler cooling are trapped at a position where the magnetic force, the radiation pressure from the laser beam, and the force of gravity are in equilibrium.

In B7, the cold atoms are optically pumped to a third state, which is insensitive to the magnetic field, and guided into the input part of the post device by utilizing the optical dipole guide from the position at which the cold atoms are trapped in B6 to the post device. As another example, the moving optical lattice technique may be used to transport the cold atoms from the trapping position to the input part of the post device. The third state may be the $^3P_2(m_J=0)$ state, the $^3P_0$ state, or the $^1S_0$ state.

The first and second embodiments are similar in that a technique is employed in which the atoms are guided to a position where the magnetic field is minimum, utilizing a property that the atoms in the $^3P_2(m_J=1)$ or $^3P_2(m_J=2)$ state are low-field-seeker.

Normally, the spin flip arising from a zero-magnetic field in which atoms are magnetically trapped violates the quantum state of the atoms. In the first embodiment, because the position where the atoms are finally trapped is a position where the magnetic force, the force of gravity, and the radiation pressure of the second light are in equilibrium, the magnetic field at this position is not zero. In the second embodiment, the atoms are at all times in the presence of a finite magnetic field as expressed by f(y). In this manner, because the systems of the first embodiment and the second embodiment are systems in which the bias magnetic field $B_0$ is applied, the loss of tapped atoms due to the spin flipping can be avoided. Furthermore, the spin flip arising from an unwanted spin state off-resonantly pumped by the cooling laser beam should be avoided during laser cooling. This condition is given by a condition that the laser cooling beam incident to excite $\sigma^+$ transition by Zeeman shift of cooling transition by the bias magnetic field $B_0$ is sufficiently non-resonant with respect to $\pi$ transition or $\sigma^-$ transition. When the Bohr magneton is $\mu_B$, the Lande g factor of an upper level of the laser cooling transition is g', and a spectrum width of the laser cooling transition is $\gamma$, the magnitude of the bias magnetic field $B_0$ to be satisfied is represented by the following Formula (5).
[Formula (5)]

$$|\mu_B g' B_0| \gg \hbar\gamma \cdots (5)$$

In the first and second embodiments, for example, a permanent magnet is used. In these embodiment, permanent magnets are more suitable as a magnetic field generation source than coils, as a stable magnetic field is required at all times without the need for switching.

On the other hand, an environment may be considered in which an apparatus which is easily adversely affected by a magnetic noise is placed adjacent to the magnetic field generation source. In such an environment, for example, a permanent magnet is used having a size which is as small as possible. As another example, a magnetic field source integrated in a small space can be used in the configuration to form the quadrupole magnetic field distribution. As yet another example, a yoke or shield with high permeability (for example, a member formed from a permalloy material or the like) can be used in the configuration designed to confine the magnetic field and prevent from leakage.

Alternatively, the structures and processes (processes A0 to A7) of the first embodiment and the structure and processes (processes B0 to B7) of the second embodiment may be combined.

In the first embodiment, the quasi three-dimensional quadrupole magnetic field is generated by the bar-shaped permanent magnet or the like. In the second embodiment, an additional magnetic field in the Y direction is generated by a stopping coil or the like. For example, the quasi three-dimensional quadrupole magnetic field of the first embodiment and the additional magnetic field of the second embodiment may be combined. After the processes A0 to A3 are performed, the atoms optically pumped to the $^3P_2$ state are magnetically trapped by the quasi three-dimensional quadrupole magnetic field and the additional magnetic field in the Y direction, and are moved to a position where the magnetic field acting in the Y direction and the force of gravity or the radiation pressure are in equilibrium. Then, the processes B6 and B7 are performed, so that the cold atoms are guided to the post device by the moving optical lattice or the optical dipole guide.

For example, a magnetic field ($\{X(G+G_X), f(Y)+YG_Y, Z(G+G_Z)\}$ is used in which the magnetic field of the second embodiment (that is, the two-dimensional quadrupole magnetic field ($G\{X, 0, -Z\}$)), the Y-component magnetic field generated by the stopping coil or the like ($\{0, f(Y), 0\}$), and the quasi three-dimensional quadrupole magnetic field of the first embodiment ($\{XG_X, YG_y, ZG_Z\}$, $|G_Y|<<|G_X|<|G_Z|$) are added. More specifically, the magnetic field ($\{X(G+G_X), f(Y)+YG_Y, Z(G+G_Z)\}$) may be applied to the atoms in the $^1S_0$ state in the magneto optical trap, to the atoms in the $^3P_2$ state in the magnetic trap, and to the atoms in the $^3P_2$ state in the guide.. By suitably selecting the magnitudes of the magnetic field gradients, and the spatial distribution of the Y-component magnetic field, fine adjustment of the trap position and a transport destination position, and appropriate adjustment and fine adjustment of the magnetic force to confine the atoms can be enabled.

Next, specific structures of the embodiments will be described.

<Specific Structure of First Embodiment>

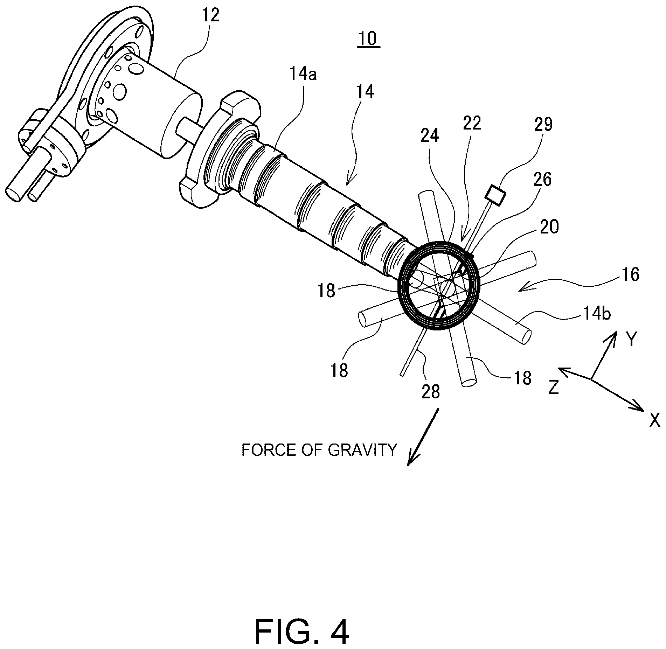

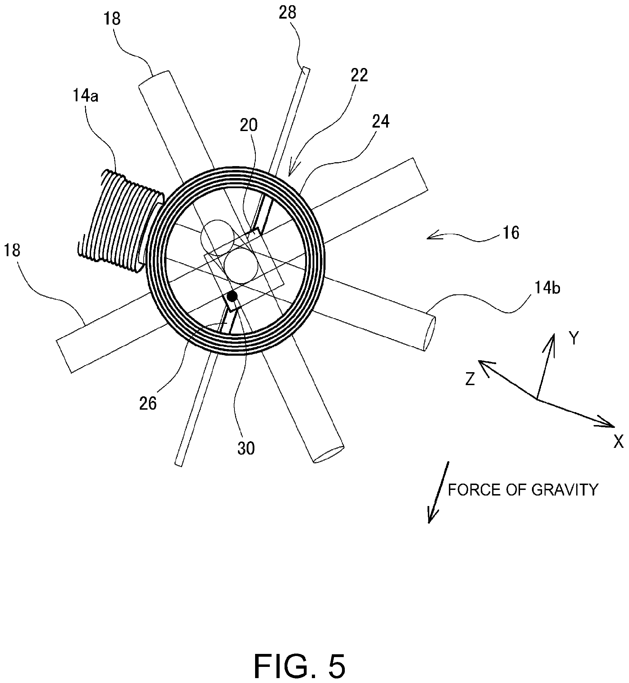

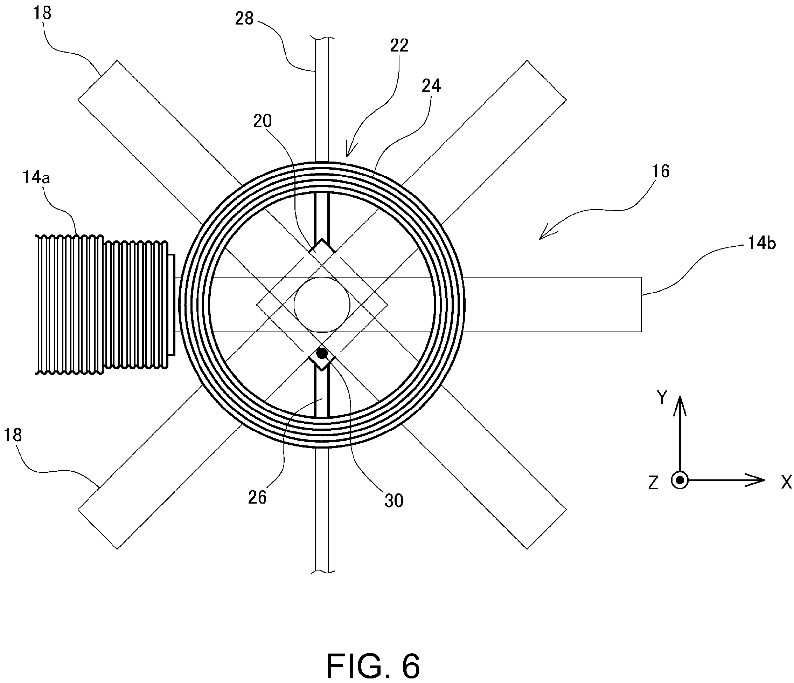

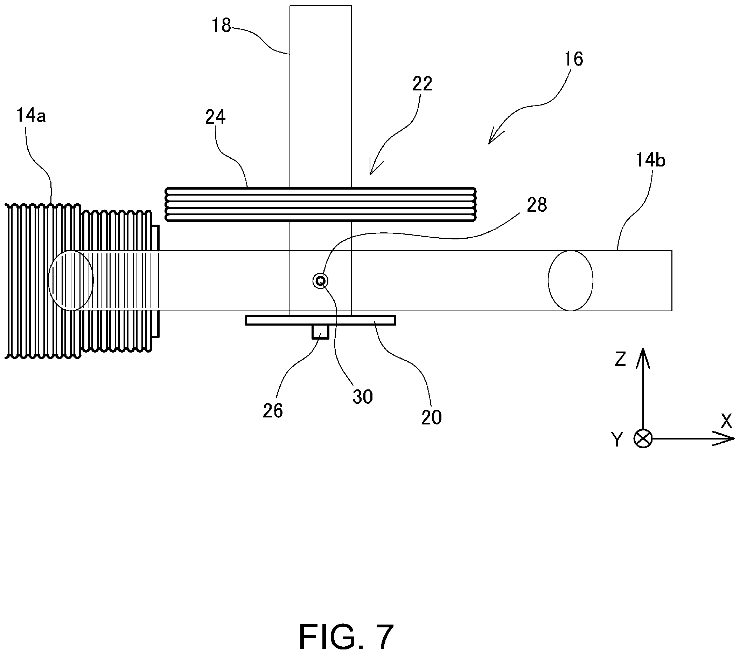

A cold atom generation apparatus and a method of generating cold atoms according to the first embodiment of the present disclosure will now be described with reference to FIGs. 4 to 7. FIG. 4 is a perspective diagram showing a cold atom generation apparatus according to the first embodiment. FIG. 5 is a perspective diagram showing a magneto-optical trap apparatus (MOT apparatus). FIG. 6 is a diagram showing the magneto-optical trap apparatus, viewed from a +Z direction. FIG. 7 is a diagram showing the magneto-optical trap apparatus, viewed from a -Y direction. A three-dimensional coordinate system, $\{X, Y, Z\}$, is defined. An X axis, a Y axis, and a Z axis are mutually orthogonal. The X direction is a direction of propagation of an atomic beam emitted from an atomic oven. The -Y direction is a direction in which the force of gravity acts.

A cold atom generation apparatus 10 according to the first embodiment comprises an atomic oven 12, a Zeeman slower 14, and a magneto-optical trap apparatus (MOT apparatus) 16. The atomic oven 12, the Zeeman decelerator 14, and the magneto-optical trap apparatus 16 are disposed under an ultra-high vacuum environment. In each of the diagrams, illustrations of fixing devices of the modules, a viewport for inputting and outputting a laser beam, a vacuum discharge port, and a vacuum discharge pump are omitted.

The atomic oven 12 includes a sample reservoir, a heater, a capillary nozzle, a temperature sensor, an electric connector, and a thermal radiation shield. A sample is disposed in the sample reservoir. For example, strontium atoms ($^{87}Sr$ or $^{88}Sr$) are used as the sample. The sample in the sample reservoir is heated by the heater, so that the atoms are evaporated and an atom vapor is generated. The capillary nozzle is connected to the sample reservoir. The atom vapor is emitted as an collimated atomic beam through the capillary nozzle. The temperature sensor is used for measuring the temperature of the sample reservoir. The electric connector is used for supplying electric power to the heater. The thermal radiation shield is used for shielding thermal radiation from the heater and the sample reservoir to the outside. As the atomic oven 12, any known atomic oven may be used. The atomic beam emitted from the atomic oven 12 propagates to the Zeeman slower 14 at a subsequent device.

The Zeeman slower 14 comprises a bore and a magnetic field generator 14a disposed around the bore, and extends in the X direction. The magnetic field generator 14a comprises, for example, a solenoid coil, and generates a magnetic field along a center axis (X axis) of the bore extending in the X direction. Here, as an example, the magnetic field generator 14a generates a magnetic field having a strength which is reduced with increasing distance from the atomic oven 12. In addition, into the bore, a resonant laser beam 14b is irradiated from a direction (-X direction) opposite the direction of propagation of the atomic bean. The atomic beam emitted from the atomic oven 12 is directed into the bore, and propagates in the X direction within the bore. The Zeeman slower 14 decelerates the atomic beam emitted from the atomic oven 12 and having a large initial velocity in accordance with the Zeeman deceleration, by the resonant laser beam 14b and the gradient magnetic field formed by the magnetic field generator 14a, to a velocity at which the atoms can be trapped by the magneto-optical trap apparatus 16 in the direction of travel. The high-temperature atomic beam propagates in the bore, while being decelerated in accordance with the Zeeman slowing technique, toward the magneto-optical trap apparatus 16. As the Zeeman slower 14, any known Zeeman decelerator may be used.

The magneto-optical trap apparatus 16 includes a vacuum chamber, and a trap space in which the atoms are trapped is formed in the vacuum chamber. The atomic beam propagating from the Zeeman decelerator 14 to the magneto-optical trap apparatus 16 is trapped by the magneto-optical trap apparatus 16. Specifically, the magneto-optical trap apparatus 16 includes a plurality of optical elements forming a group of laser beams 18, and a magnetic field generator 22.

The plurality of optical elements include, for example, a light source, a mirror such as a $\lambda/4$ mirror 20, a beam splitter, and the like, and irradiate the group of laser beams 18 from 6 directions towards a zero magnetic field position, in order to impart to the atoms a restoring force to atoms from a radiation pressure. The group of laser beams 18 include a laser beam which propagates in the X direction on the X axis, a laser beam which propagates in a -X direction opposite the X direction, a laser beam which propagates in the Y direction on the Y axis, a laser beam which propagates in a -Y direction opposite the Y direction, a laser beam which propagates in the Z direction on the Z axis, and a laser beam which propagates in a -Z direction opposite the Z direction. The $\lambda/4$ mirror 20 is disposed on the Z axis. The laser beam which propagates in the -Z direction is formed by the laser beam which propagates in the Z direction and the $\lambda/4$ mirror 20. In other words, the laser beam which propagates in the -Z direction is formed by the laser beam which propagates in the Z direction being reflected by the $\lambda/4$ mirror 20.

The magnetic field generator 22 includes a coil 24 and a permanent magnet 26, and generates a quasi three-dimensional quadrupole magnetic field. The permanent magnet 26 has a shape of an elongated bar. The permanent magnet 26 is disposed along the Y direction, and is magnetized in the Z direction. The coil 24 has an inner size approximately equal to a length of the permanent magnet 26 (a length in a direction of extension of the permanent magnet 26 (that is, a length in the Y direction)). The coil 24 is disposed in parallel to an XY plane formed by the X axis and the Y axis.

The light source which irradiates the group of laser beams 18 and the magnetic field generator 22 correspond to an example of a first cooling means.

The permanent magnet 26, the $\lambda/4$ mirror 20, and the coil 24 are disposed along the Z direction in this order, and a zero magnetic field position is present between the $\lambda/4$ mirror 20 and the coil 24.

A current is caused to flow in the coil 24 in such a manner that an absolute value of the magnetic field formed by the coil 24 at a center position of the trap space in which the magneto-optical trap is realized and an absolute value of the magnetic field formed by the permanent magnet 26 at the center position are approximately equal to each other, and the directions of these magnetic fields are opposite from each other. The trap space in which the magneto-optical trap is realized corresponds to an example of a first region.

The $\lambda/4$ mirror 20 is disposed at a position which does not block the laser beam which propagates in the X direction, the laser beam which propagates in the -X direction, the laser beam which propagates in the Y direction, and the laser beam which propagates in the -Y direction. In order to prevent degradation of the optical characteristic of the $\lambda/4$ mirror 20, the $\lambda/4$ mirror 20 may be fixed at a location other than a light receiving part (for example, four corners). In addition, the $\lambda/4$ mirror 20 is disposed in a manner to not directly contact the permanent magnet 26.

A laser beam 28 is a laser beam for narrow-line laser cooling, irradiated from a light source 29, and has a wavelength of 2.9 $\mu$m. The laser beam 28 is illuminated to a location proximate a position 30 where the magnetic force, the force of gravity, and a radiation pressure of the laser beam 28 are in equilibrium. The position 30 corresponds to an example of a second region, and the light source 29 corresponds to an example of a second cooling means.

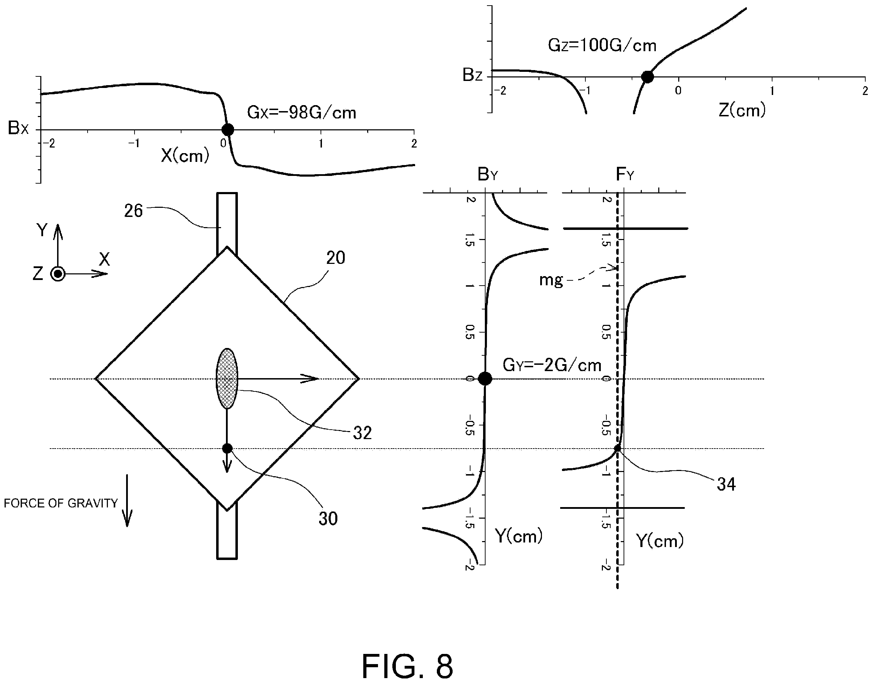

With reference to FIG. 8, the trapped atoms and magnetic field components in respective directions will now be described. FIG. 8 shows trapped atoms and calculation results of the magnetic field components in respective directions.

FIG. 8 shows the $\lambda/4$ mirror 20, viewed from the Z direction. As shown by reference numeral 32, atoms are trapped at a position at an upper side of the $\lambda/4$ mirror 20 on the Z axis. A space indicated by reference numeral 32 is a trap space, and corresponds to the first region.

$B_X$ shown in FIG. 8 represents a magnetic field component in the X direction on the X axis, $B_Y$ represents a magnetic field component in the Y direction on the Y axis, and $B_Z$ represents a magnetic field component in the Z direction on the Z axis. In graphs showing the calculation results of the magnetic field components, the horizontal axis shows a position in respective direction, and the vertical axis shows the magnetic field. Zero magnetic field positions at which $B_X$, $B_Y$, and $B_Z$ are respectively zero correspond to the origins of the X axis, the Y axis, and the Z axis. The atoms are trapped in the trap space (corresponding to the first region) including the zero magnetic field position. $G_X$ represents a magnetic field gradient in the X direction (a gradient of the magnetic field component in the X direction), $G_Y$ represents a magnetic field gradient in the Y direction (a gradient of the magnetic field component in the Y direction), and $G_Z$ represents a magnetic field gradient in the Z direction (a gradient of the magnetic field component in the Z direction).

The following result is obtained from the calculation results of the magnetic field.

Gz=100 G/cm
$-G_Y \ll -G_X \sim G_Z$
$a_{aniso}=0.96$

A distribution of the magnetic field which is generated can be considered a quasi three-dimensional quadrupole magnetic field distribution having an anisotropy. That is, strong magnetic forces are generated in the X direction and the Z direction, a weak magnetic force is generated in the Y direction in which the force of gravity acts, and the distribution of the magnetic field can be said to be the quasi three-dimensional quadrupole magnetic field. Here, as an example of $-G_Y \ll -G_X \sim G_Z$, $G_Z \sim$GX=100 G/cm is exemplified, but desirably, $G_Z$ is in a range of 30 to 100 G/cm.

The atoms in the slow atom beam flowing out of the Zeeman slower are trapped in an optical magnetic trap in the trap space containing a zero magnetic field position by interacting with the quasi-triple quadrupole magnetic field and the frequency-tuned laser beam group 18.

The atoms trapped in the magneto optical trap in the trapping space are relaxed to the $^3P_2$ state, the atoms in the $^3P_2$ state are created.

The atoms in the $^3P_2$ state are subjected to strong magnetic forces by interacting with a quasi-three dimensional quadrupole magnetic field, and are magnetically trapped. As shown in FIG. 8, while strong magnetic forces are generated in the X direction and the Z direction, a weak magnetic force is generated in the Y direction in which the force of gravity acts. For example, the force of gravity acting on $^{88}$Sr atoms in the $^3P_2$ ($m_J$=2) is equivalent to a magnetic force from the magnetic field gradient of 5.2 G/cm. The magnetic field gradient in the Y direction at the zero magnetic field position is about 2 G/cm. Therefore, the magnetic force obtained by the magnetic field gradient in the Y direction is smaller than the force of gravity. Because of this, the force of gravity wins over the magnetic force in the Y direction, and a $^{88}$Sr atomic cloud in the $^3P_2$ state and ($m_J$=2) state is moved in the -Y direction, to a position where the magnetic force in the Y direction, the force of gravity, and the radiation pressure of the laser beam 28 (second light) are in equilibrium.

FIG. 8 shows a graph of the magnetic force in the Y direction, $F_y$. The horizontal axis shows a position in the Y direction, and the vertical axis shows a the magnetic force. This graph also shows the force of gravity. In this graph, a point shown by reference numeral 34 is a point where a value of the magnetic force in the Y direction is equal to a value of the force of gravity, and the point of intersection corresponds to the position 30 where the magnetic force in the Y direction, the force of gravity, and the radiation pressure of the laser beam 28 (second beam) are in equilibrium. In the example configuration of FIG. 8, the position 30 is a position distanced from the zero magnetic field position by 7.5 mm in the -Y direction. That is, the atoms are moved from the position where the atoms are trapped by 7.5 mm in the -Y direction.

The $^{88}$Sr atomic cloud moved to the position 30 interacts with the laser beam 28 (laser beam having the wavelength of 2.9 $\mu$m) directed at the position 30, to be Doppler cooled down to about a few microkelvins.

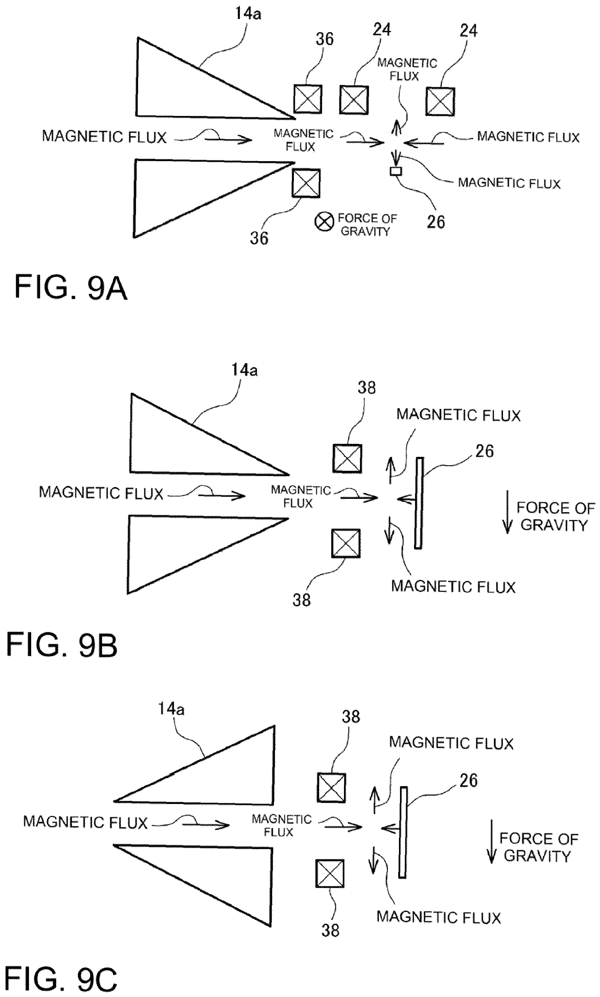

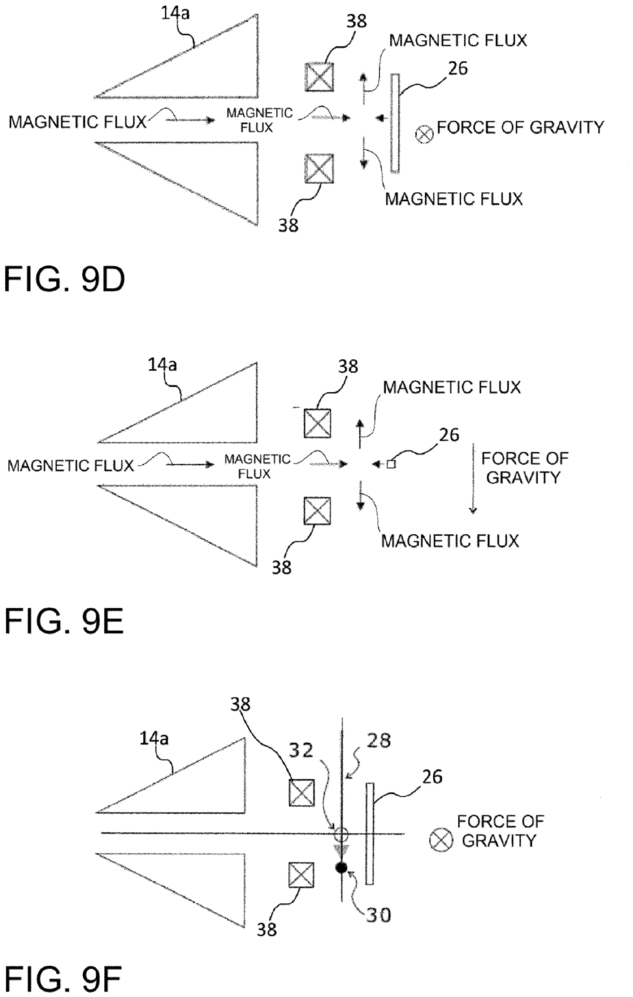

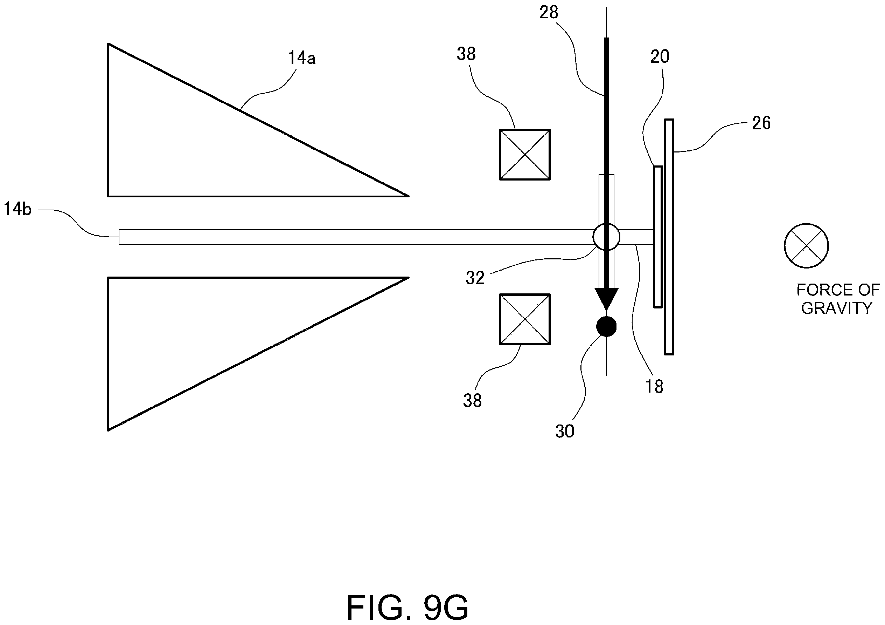

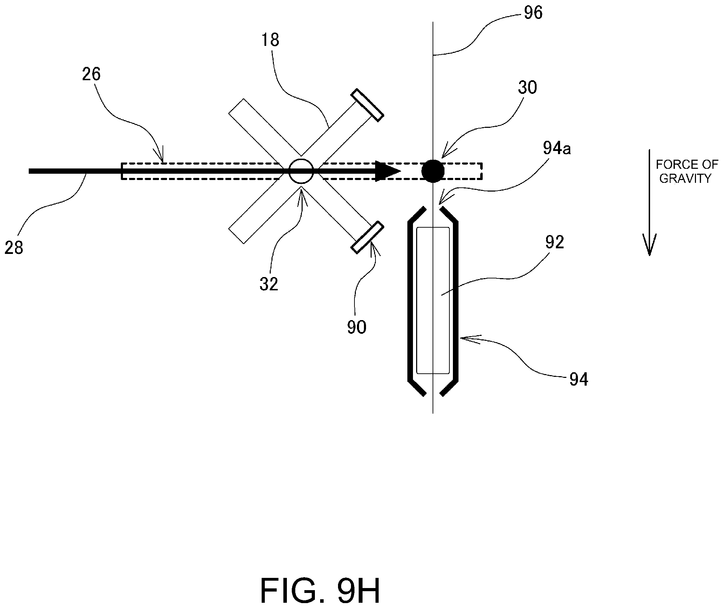

FIGs. 9A, 9B, 9C, 9D, 9E, 9F, 9G, and 9H show alternative configurations of the first embodiment of the present disclosure.

In a first alternative configuration shown in FIG. 9A, a compensation coil 36 disposed between the Zeeman moderator 14 and the coil 24 compensates for the leakage field from the Zeeman slower 14 in order to form the quasi-triple quadrupole magnetic field. For example, the compensation coil 36 is disposed around the exit aperture for the atomic beam in the Zeeman slower 14.

In a second alternative configuration shown in FIG. 9B, the magnetic field generator 14a, an tuning coil 38, and the permanent magnet 26 are disposed in an aligned manner in this order. With this configuration, the distribution of the quasi three-dimensional quadrupole magnetic field is a distribution rotated by 90° from the distribution of the quasi three-dimensional quadrupole magnetic field formed by the structure shown in FIG. 4 or 9A, with reference to an axis of symmetry of the Zeeman magnetic field. In this configuration, the quasi three-dimensional quadrupole magnetic field is formed by the magnetic field generated by the permanent magnet 26 and a magnetic field formed by the magnetic field generator 14a and the tuning coil 38. By utilizing the leaking magnetic field from the magnetic field generator 14a, the electric power can be saved in comparison to the structure shown in FIG. 9A. It is necessary to cause the resonant laser beam used for the Zeeman tuning and the laser beams used for the magneto-optical trap to enter from the side of the atomic oven to the side of the magneto-optical trap apparatus along the center axis of the Zeeman slower. JP 2021-163884 A discloses this method.

FIG. 9C shows a structure of a third alternative configuration. In the structures shown in FIGs. 4, 9A, and 9B, the magnetic field generator 14a of the Zeeman slower 14 is a magnetic field generator of a decreasing field type, and generates a magnetic field with a strength which is reduced as a distance from the atomic oven 12 is increased. The magnetic field generator 14a of the Zeeman slower 14 in the third alternative configuration is a magnetic field generator of an increasing field type, and generates a magnetic field with the strength which increases with increasing distance from the atomic oven 12. Because the leaking magnetic field from the magnetic field generator 14a is large, the quasi three-dimensional quadrupole magnetic field can be formed by the leaking magnetic field and the magnetic field generated by the permanent magnet 26. In this case also, the tuning coil 38 may be utilized in order to compensate and fin-tune the magnetic field magnetic field or for fine adjustment.

FIGs. 9D to 9F show a structure of a fourth alternative configuration. FIGs. 9D and 9F are diagrams showing the structure of the fourth alternative configuration, viewed from a direction in which the force of gravity acts. FIG. 9E shows the structure of the fourth alternative configuration, viewed from a direction orthogonal to the direction in which the force of gravity acts. In FIGs. 9D and 9E, magnetic fluxes are expressed with arrows. FIG. 9E shows the laser beam 28 for the narrow-line laser cooling, with an arrow. In the structure shown in FIG. 9B (structure of the second alternative configuration), the direction in which the weak magnetic force is generated is the direction in which the force of gravity acts. In the structure shown in FIGs. 9D to 9F, the direction in which the weak magnetic force is generated is the direction orthogonal to the direction in which the force of gravity acts. With this configuration, the distribution of the quasi three-dimensional quadrupole magnetic field is a distribution rotated by 90° from the distribution of the quasi three-dimensional quadrupole magnetic field formed by the structure of the second alternative configuration, with reference to an axis of symmetry of the magnetic field in Zeeman slower.

With the magneto-optical trap, the atoms are trapped in the trap space (space indicated by reference numeral 32) which corresponds to the first region. The trapped atoms are cooled in narrow-line laser cooling by the laser beam 28. In addition, at the position 30 at which the laser beam 28 is propagated farther than the position of the trap space, the radiation pressure of the laser beam 28 are balanced with the weak magnetic force described above. With this configuration, the atoms are moved to the position 30 which corresponds to the second region. In the structure shown in FIG. 4, in order to move the atoms from the first region to the second region, in addition to the magnetic force, the force of gravity, or a part of the force of gravity acts. On the other hand, in the structure of the fourth alternative configuration, in addition to the magnetic force, the radiation pressure from the laser beam 28 for n narrow-line laser cooling acts.

FIGs. 9G and 9H show a structure of a fifth alternative configuration. FIG. 9G shows the structure of the fifth alternative configuration, viewed from a direction in which the force of gravity acts. FIG. 9H is a diagram showing the structure of the fifth alternative configuration, viewed from a direction orthogonal to the direction in which the force of gravity acts. The structure of the fifth alternative configuration comprises a $\lambda/4$ mirror 90, and a light-shielding wall 94 which surrounds a clock transition space 92 which corresponds to the post device. The light-shielding wall 94 is an example of a blocking mechanism. An opening 94a is formed on the light-shielding wall 94. In addition, the first region (space indicated by reference numeral 32) and the second region (space indicated by reference numeral 30) are formed. The first region and the clock transition space 92 are spatially separated from each other. As an example, a first movement direction from the first region to the second region and a second movement direction from the second region to the clock transition space 92 are mutually orthogonal.

With the magneto-optical trap, the atoms are trapped in the first region. The atoms trapped in the magneto-optical trap are relaxed to the $^3P_2$ state, and are trapped on the magnetic guide formed by the bar-shaped permanent magnet 26. Due to a radiation pressure of the laser beam 28 for narrow-line laser cooling, the atoms in the $^3P_2$ state are moved to the second region where the radiation pressure are balanced with the weak magnetic force described above, and are cooled in the narrow-line laser cooling. In the second region, the cold atoms are optically pumped to the third state, insensitive to the magnetic field, and are guided to the clock transition space 92 at the post device using a moving optical lattice 96 connecting the second region and the clock transition space 92. The opening 94a is formed on the light-shielding wall 94, and the cold atoms are guided into the clock transition space 92 through the opening 94a.

For example, when the third state is the $^1S_0$ state, the laser beam irradiated to the first region and the spontaneously emitted fluorescence from the magneto-optical trapping may act on the cold atoms in the third state and may cause an light shift, which may result in an unwanted perturbation on the measurement at the post device.

On the other hand, in the structure shown in FIG. 9H, because the clock transition space 92 is covered by the light-shielding wall 94 having a light-shielding property, the direct stray light from the first region to the clock transition space 92, or the direct stray light from the first region through the opening 94a to the clock transition space 92, is sufficiently suppressed. With this configuration, the influences on the post device can be suppressed.

In the example configuration of FIG. 9H, as an example, the first movement direction from the first region to the second region, and the second movement direction from the second region to the clock transition space 92 are orthogonal to each other, but this is merely exemplary, and the angle between the first movement direction and the second movement direction may be any angle which is non-zero. In other words, it is sufficient that the first region, the second region, and the clock transition space 92 are formed in such a manner that a straight line connecting the first region and the second region, and a straight line connecting the second region and the clock transition space 92 are not on the same straight line. By setting the angle between the first movement direction and the second movement direction to a non-zero angle, entrance of the spontaneously emitted fluorescence from the first region through the opening 94a or the like into the clock transition space 92 can be suppressed. Therefore, the angle between the first movement direction and the second movement direction is not limited to 90°, and may be any angle which is non-zero.

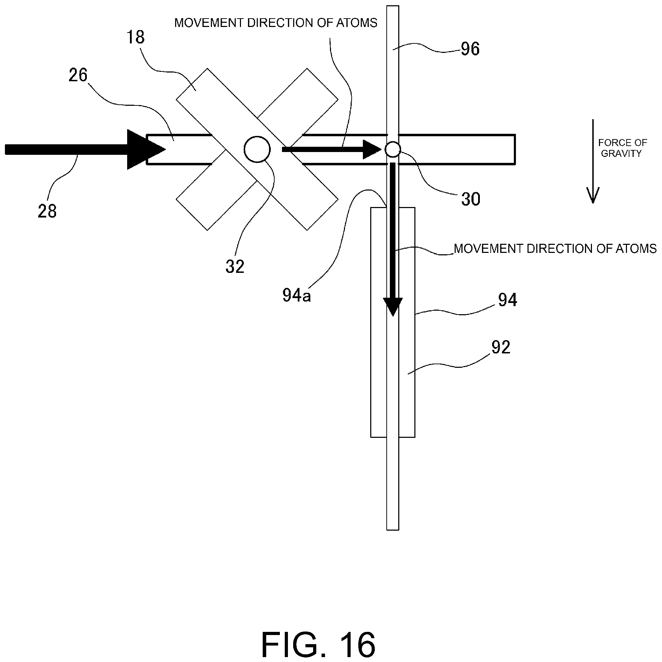

FIG. 16 shows a structure similar to the structure shown in FIGs. 9G and 9H. In a cold atom generation apparatus shown in FIG. 16, the laser beam 28 corresponding to the second light and a moving optical lattice 96 (or an optical dipole guide) are used. In addition, the clock transition space 92 is formed as a post device structure, and the first region (space indicated by reference numeral 32) and the second region (space indicated by reference numeral 30) are formed. The first region and the clock transition space 92 are spatially separated from each other. As an example, the first movement direction from the first region to the second region, and the second movement direction from the second region to the clock transition space 92 are mutually orthogonal. According to this structure, because the clock transition space 92 is sufficiently blocked from the first region, the entrance of the spontaneously emitted fluorescence generated in the first region into the clock transition space 92 can be avoided.

In the example configuration of FIG. 16, as an example, the first movement direction the second movement direction from the second region to the clock transition space 92 are mutually orthogonal, but this is merely exemplary, and the angle between the first movement direction and the second movement direction may be any angle which is non-zero. That is, it is sufficient that the first region, the second region, and the clock transition space 92 are formed in such a manner that a straight line connecting the first region and the second region, and a straight line connecting the second region and the clock transition space 92 are not placed on the same straight line. By setting the angle between the first movement direction and the second movement direction to a non-zero angle, entrance of the spontaneously emitted fluorescence from the first region into the clock transition space 92 can be suppressed. Therefore, the angle between the first movement direction and the second movement direction is not limited to 90°, and may be any angle which is non-zero.

<Specific Structure of Second Embodiment>

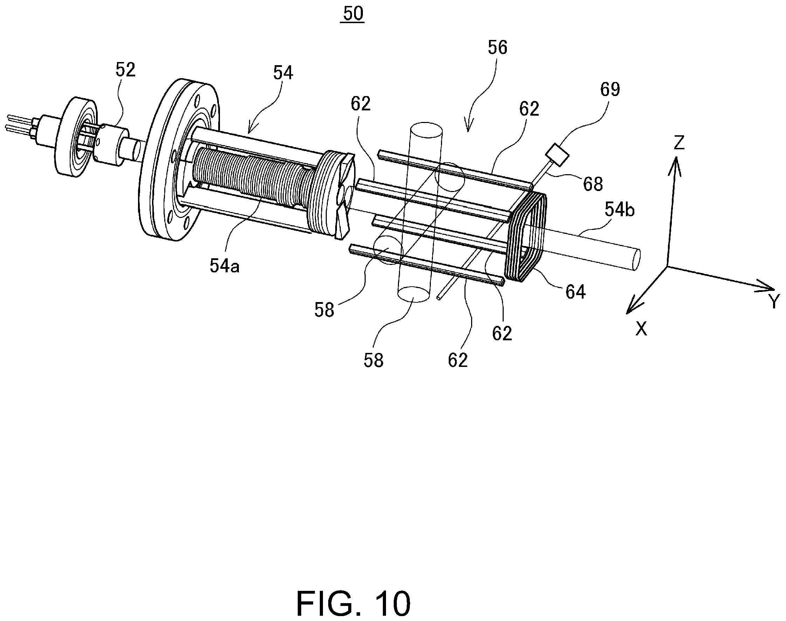

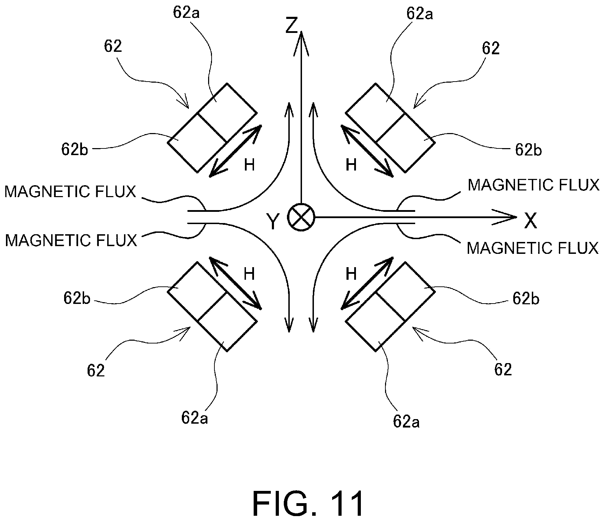

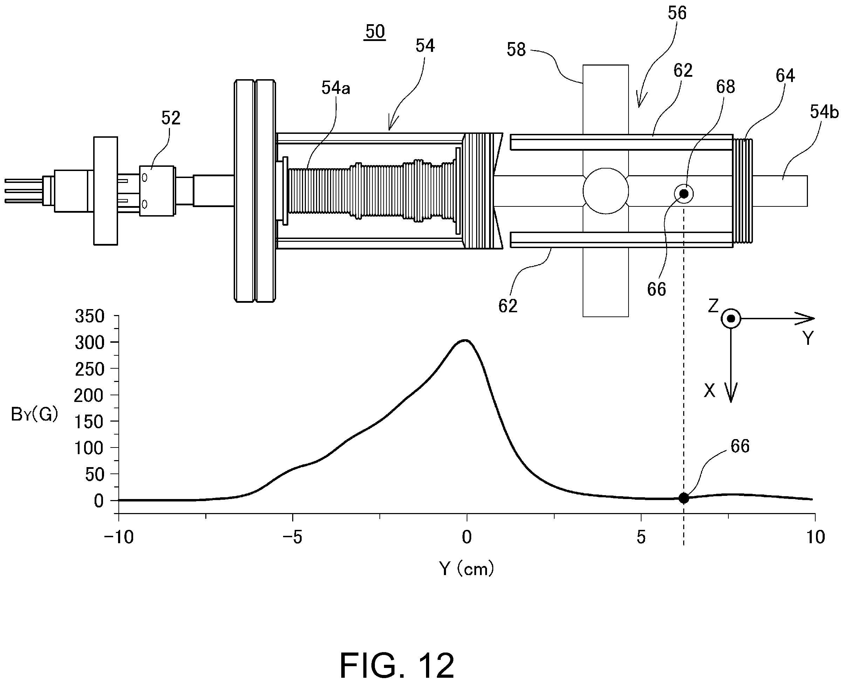

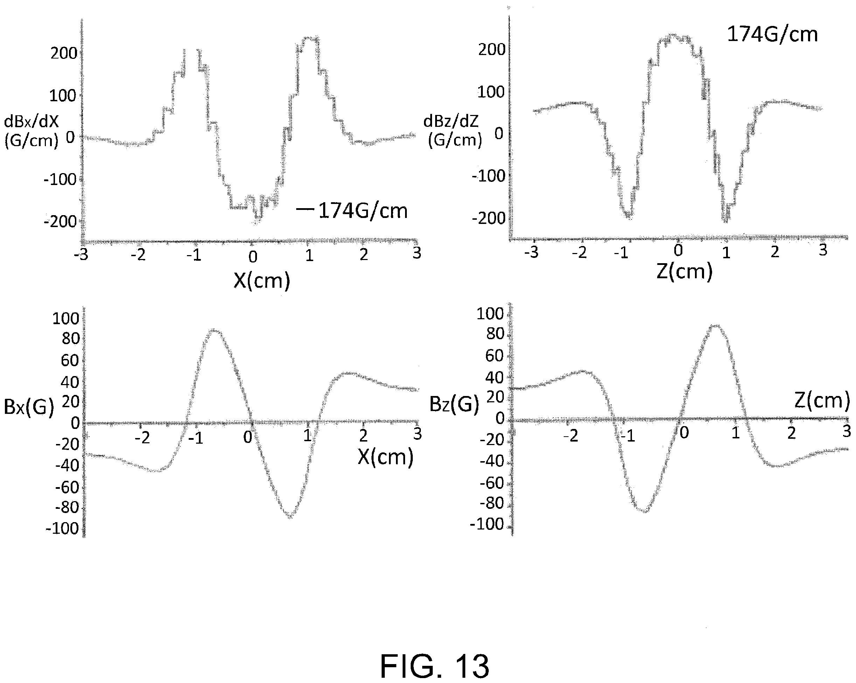

A cold atom generation apparatus and a method of generating cold atoms according to the second embodiment of the present disclosure will now be described with reference to FIGs. 10 to 13. FIG. 10 is a perspective diagram showing a cold atom generation apparatus according to the second embodiment. FIG. 11 is a perspective diagram showing four permanent magnets, viewed from a Y direction. FIG. 12 is a diagram showing a distribution of a magnetic field formed in the Y direction. FIG. 12 also shows the cold atom generation apparatus according to the second embodiment, viewed from the Z direction. FIG. 13 is a diagram showing distributions of magnetic fields and distributions of magnetic field gradients. A three-dimensional coordinate system, {X, Y, Z}, is defined. An X axis, a Y axis, and a Z axis are orthogonal to each other. The Y direction is a direction of propagation of an atomic beam emitted from an atomic oven.

A cold atom generation apparatus 50 according to the second embodiment comprises an atomic oven 52, a Zeeman slower 54, and a magneto-optical trap apparatus 56. The atomic oven 52, the Zeeman slower 54, and the magneto-optical trap apparatus 56 are disposed under an ultra-high vacuum environment. In each of the diagrams, illustrations of fixing devices of the modules, a viewport for inputting and outputting a laser beam, a vacuum discharge port, and a vacuum discharge pump are omitted. Similar to the first embodiment, strontium atoms ($^{87}$Sr or $^{88}$Sr) are used as a sample.

The atomic oven 52 includes a structure identical to that of the atomic oven 12 of the first embodiment, and emits an atomic beam by heating the sample with the heater. The Zeeman slower 54 has a structure identical to that of the Zeeman slower 14 of the first embodiment. More specifically, the Zeeman slower 54 comprises a magnetic field generator 54a, and decelerates the atomic beam by a magnetic field formed by the magnetic field generator 54a, and a laser beam 54b.

The atomic beam emitted from the atomic oven 52 is decelerated by the Zeeman slower 54, and propagates to the magneto-optical trap apparatus 56. At the magneto-optical trap apparatus 56, the atoms are trapped in a magneto-optical trap which uses a two-dimensional quadrupole magnetic field. Specifically, the magneto-optical trap apparatus 56 comprises a plurality of optical elements forming a group of laser beams 58, and a magnetic field generator 60.

The plurality of optical elements include, for example, a light source, a mirror, a beam splitter, and the like, and irradiate the group of laser beams 58 from 4 directions towards a zero magnetic field position, in order to impart to the atoms a restoring force from a radiation pressure. In the example configuration shown in FIG. 10, the group of laser beams 58 include a laser beam which propagates in the X direction on the X axis, a laser beam which propagates in a -X direction opposite the X direction, a laser beam which propagates in the Z direction on the Z axis, and a laser beam which propagates in a -Z direction opposite the Z direction. In a -Y direction, the laser beam 54b used for the Zeeman slower propagates.

The magnetic field generator 60 includes four permanent magnets 62, and generates the two-dimensional quadrupole magnetic field. Each permanent magnet 62 has a shape of an elongated bar, and the permanent magnets 62 are disposed along the Y direction, centered at the Y axis, around the Y axis, at every 90°.

FIG. 11 shows the permanent magnets 62, viewed from the Y direction. FIG. 11 also shows magnetic fluxes formed by the permanent magnets 62. The permanent magnets 62 are magnetized in a height direction H. Reference numeral 62a shows a positive pole, and reference numeral 62b shows a negative pole. The permanent magnets 62 are placed such that opposite magnetic poles of the permanent magnets 62 oppose each other. The laser beams included in the group of laser beams 58 pass between the permanent magnets 62.

By the four permanent magnets 62, a two-dimensional quadrupole magnetic field (B=G(x, 0, -z), G=174 G/cm) is formed, consisting of an X and Z components.

In addition, a stopping coil 64 is disposed. The stopping coil 64 is a coil which surrounds the Y axis, centered at the Y axis (corresponding to an axis of the atomic beam), and is placed at a position opposite from the Zeeman slower 54 with the four permanent magnets 62 therebetween. With the magnetic field generator 54a (that is, the Zeeman coil) of the Zeeman slower 54, and the stopping coil 64, a magnetic field in the Y direction is generated.

The light source which irradiates the group of laser beams 58, the magnetic field generator 60, and the stopping coil 64 correspond to an example of the first cooling means.

The atoms in the atomic cloud trapped in the two-dimensional magneto-optical trap by the two-dimensional quadrupole magnetic field are relaxed to the $^3P_2$ state, creating the atoms in the $^3P_2$ state. A trap space in which the magneto-optical trap using the two-dimensional quadrupole magnetic field is realized corresponds to an example of the first region.

$^{88}$Sr atoms in the $^3P_2$ state ($m_J$=1) and $^3P_2$($m_J$=2) states are in low-field seeking state, and are strongly confined on the Y axis in the two-dimensional quadrupole magnetic field, by magnetic forces acting in the X and Z directions.

This point will now be described with reference to FIG. 13. $B_X$ in FIG. 13 represents a magnetic field component in the X direction on the X axis, and $B_Z$ represents a magnetic field component in the Z direction on the Z axis. $dB_X/dX$ represents a magnetic field gradient in the X direction (a gradient of the magnetic field component in the X direction), and $dB_Z/dZ$ represents a magnetic field gradient in the Z direction (a gradient of the magnetic field component in the Z direction). The horizontal axis of each of the graphs shows a position in the X direction or in the Z direction.

At positions corresponding to the origins of the X axis, the Y axis, and the Z axis, the magnetic field component in the X direction and the magnetic field component in the Z direction become zero, and absolute values of the magnetic field gradient in the X direction and the magnetic field gradient in the Z direction at this position become large. For example, the magnetic field gradient in the X direction is -174 G/cm, and the magnetic field gradient in the Z direction is 174 G/cm. In this manner, at the position where the magnetic field component in the X direction and the magnetic field component in the Z direction are both zero, the magnetic force in the X direction and the magnetic force in the Z direction are so strong that the atoms are strongly confined on the Y axis.

FIG. 12 shows a magnetic field component By in the Y direction. By monotonically decreases from an exit of the Zeeman slower 54 (that is, a location where the atoms flow out from the magnetic field generator 54a) toward a local minimum position 66 near the stopping coil 64. The local minimum position 66 is a position where an effective potential becomes a local minimum. The effective potential refers to a total potential of the magnetic force and the force of gravity acting on the atoms. The atomic cloud is guided from the position where the atomic cloud is trapped (that is, the origins of the X axis, the Y axis, and the Z axis) toward the local minimum position 66 by a magnetic force proportional to a gradient of an absolute value of $B_Y$. The local minimum position 66 corresponds to an example of the second region.

An $^{88}$Sr atomic cloud moved to the local minimum position 66 interacts with a laser beam 68 (laser beam having a wavelength of 2.9 $\mu$m) irradiated from a light source 69 toward the local minimum position 66, so as to be Doppler cooled, and the temperature of the $^{88}$Sr atom cloud is down to about a few microkelvins. The atoms cooled by the Doppler cooling are trapped at a position where a radiation pressure from the laser beam 68, the magnetic force, and the force of gravity are in equilibrium. The light source 69 corresponds to an example of the second cooling means.

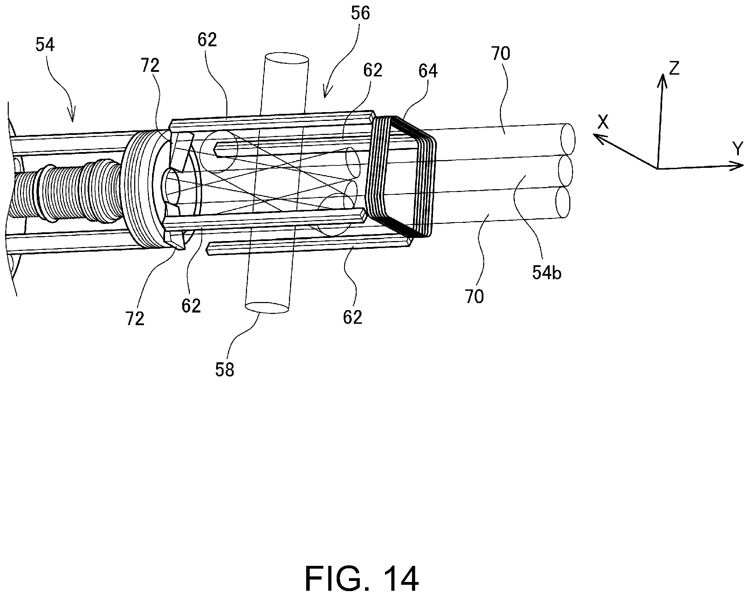

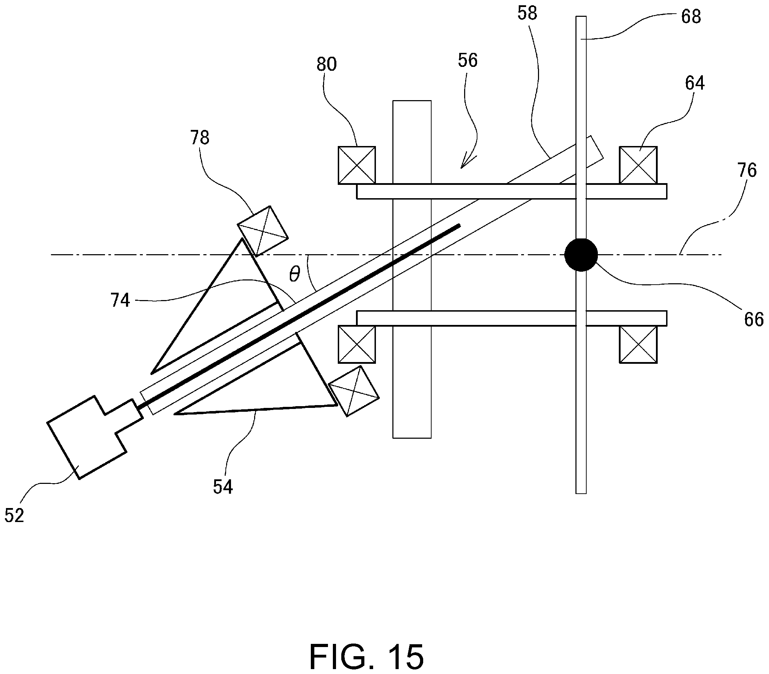

FIGs. 14 and 15 show alternative configurations of the second embodiment of the present disclosure.

FIG. 14 is a perspective diagram showing a cold atom generation apparatus according to a sixth alternative configuration. In the sixth alternative configuration, in addition to the magneto-optical trap using the two-dimensional quadrupole magnetic field, an optical molasses effect is utilized to apply the radiation pressure in the Y direction.

Through the same port as that for the laser beam 54b used for Zeeman slower, a laser beam 70 for applying the radiation pressure in the Y direction enters the magneto-optical trap apparatus 56. In the example configuration of FIG. 14, two laser beams 70 are directed parallel to the laser beam 54b into the magneto-optical trap apparatus 56.

Two $\lambda/4$ mirrors 72 are disposed around the exit of the Zeeman slower 54. Each laser beam 70 is reflected by the $\lambda/4$ mirror 72 at an appropriate angle, and the reflected laser beams intersect in the trap space in which the magneto-optical trap is realized using the two-dimensional quadrupole magnetic field. The atoms flowing in the space of this intersection are subjected to the radiation pressures from the laser beams, and are confined and decelerated also in the Y direction.

FIG. 15 is a diagram showing a cold atom generation apparatus according to a seventh alternative configuration, viewed from the Z direction. In the example configurations described above, the axis of the atomic beam and the axis of the magnetic guide are parallel with each other. However, in the seventh alternative configuration, an axis 74 of the atomic beam and an axis 76 of the magnetic guide are not parallel with each other, and an angle θ may be provided between these axes. The angle theta eliminates or suppresses adverse factors for the post device, such as thermal radiation from the atomic oven 52, residues of the atomic beam which are not trapped, scattering of the laser beam for Zeeman slower, or the like, on the post device can be prevented or suppressed.

Alternatively, in order to prevent unwanted magnetic fields from affecting the magneto-optical trap and the magnetic guide using the two-dimensional quadrupole magnetic field, a compensation coil 78 may be provided at the exit of the Zeeman slower 54, or an tuning coil 80 may be provided at the entrance of the magnetic guide or the magnetic trap. With this configuration, adjustment for forming an ideal magnetic field distribution can be facilitated.

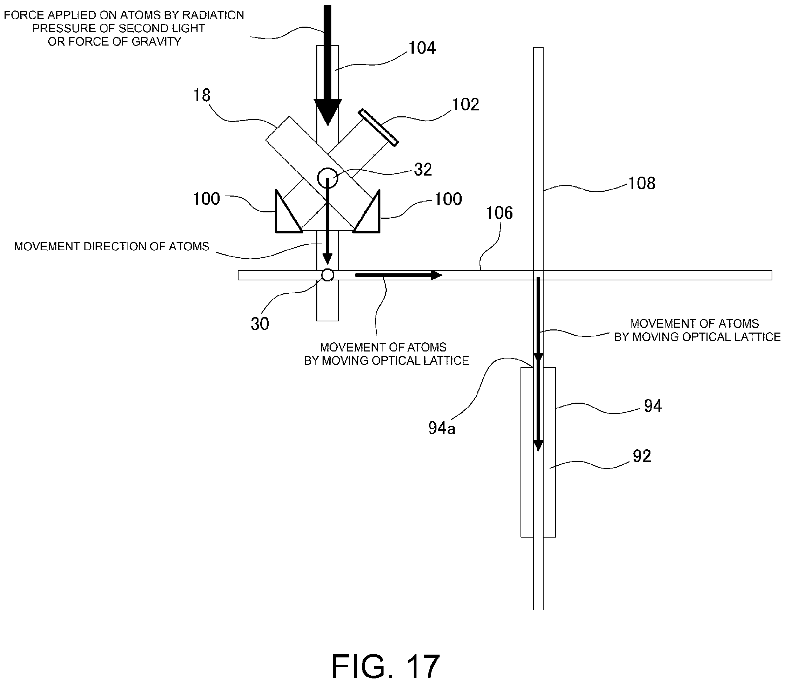

With reference to FIG. 17, a cold atom generation apparatus according to an eighth alternative configuration will now be described. In the eighth alternative configuration, atoms moved to the second region are guided to the post device using two moving optical lattices which intersect at a non-zero angle. As a result, the first region is spatially separated from the post device, suppressing spontaneously emitted fluorescence from the first region to reach up to the post device.

With the magneto-optical trap realized by the group of laser beams 18 (a mirror 100, a $\lambda/4$ mirror 102, or the like is used for realization of the magneto-optical trap), atoms are trapped in the first region (space indicated by reference numeral 32). The trapped atoms are relaxed to the $^3P_2$ state. In the first embodiment, the atoms are trapped on a magnetic guide 104 using the quasi three-dimensional quadrupole magnetic field. In the second embodiment, the atoms are trapped on the magnetic guide 104 using the two-dimensional quadrupole magnetic field. The atoms in the $^3P_2$ state are moved to the second region (space indicated by reference numeral 30) in which the magnetic force, the radiation pressure of the second light, and the force of gravity are in equilibrium, and are cooled in the narrow-line laser cooling. In the second region, the cold atoms are optically pumped to the third state, insensitive to the magnetic field, and are trapped in a first moving optical lattice 106. The trapped atoms are guided by the first moving optical lattice 106, and move to a point of intersection with a second moving optical lattice 108. At the point of intersection, the atoms trapped in the first moving optical lattice 106 or a part of atoms trapped in the first moving optical lattice 106 are transported to the second moving optical lattice 108, and are trapped in the second moving optical lattice 108. The trapped atoms are guided by the second moving optical lattice 108, and are guided through the opening 94a, into the clock transition space 92 surrounded by the light-shielding wall 94.

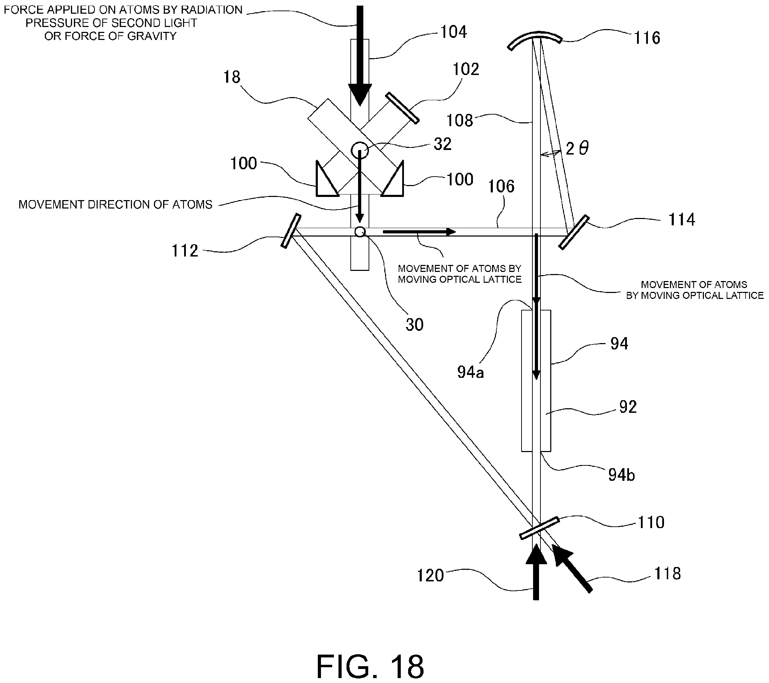

With reference to FIG. 18, a cold atom generation apparatus according to a ninth alternative configuration will now be described. Two moving optical lattices 106 and 108 (that is, two moving optical lattices which intersect at a non-zero angle), which are one constituting element of the ninth alternative configuration, are realized by a bow-tie cavity coupled to laser beams 118 and 120 which are respectively detuned. In order to realize the bow-tie cavity, an input coupler mirror 110, mirrors 112 and 114, and a concave mirror 116 are placed. The input coupler mirror 110, the mirrors 112 and 114, and the concave mirror 116 are geometrically placed in such a manner that a laser beam is incident on the concave mirror 116 at approximately a right angle; that is, in such a manner that an angle $\theta$ in FIG. 18 is reduced. As a result, (1) design of a cavity stability conditions can be facilitated, and (2) beam sizes of the two intersecting moving optical lattices 106 and 108 can be set equal to each other.

As shown in FIG. 18, the elements are appropriately arranged in such a manner that the second region (space indicated by reference numeral 30) and the clock transition space 92 are placed on an optical path in the bow-tie cavity. The two laser beams 118, 120 for two moving optical lattice detuned from each other are incident on a bow-tie cavity consisting of the input coupler mirror 110, mirrors 112, 114 and a concave mirror 116. The laser light 118 enters through the input coupler mirror 110, is reflected by the mirror 112, passes through the second region, is reflected by another mirror 114 and a concave mirror 116, passes through the point where the optical paths intersect and travels up to an aperture 94a of the clock transition space 92, surrounded by a light-shielding wall 94. The other laser beam 120 for the moving optical lattice enters through the input coupler mirror 110 and travels up to another aperture 94b (opposite the aperture 94a) of the clock transition space. The laser beam 118 from the aperture 94a and the laser beam 120 from aperture 94b pass through the clock transition space 92, exit from opposite apertures respectively, and travel in opposite optical paths to be reflected by the input coupler mirror 110, and recycles the same path. In other words, the laser beam 118 travels from the aperture 94a, through the clock transition space 92 and the aperture 94b, and recycles the same path. The laser beam 120 travels from the aperture 94b, through the clock transition space 92 and the aperture 94a, and recycles the same path.

In the second region, the cold atoms are optically pumped to the third state, insensitive to the magnetic field, and are trapped in the first moving optical lattice 106 formed in the bow-tie cavity. The trapped atoms are guided by the first moving optical lattice 106 and are moved to a point of intersection between the first moving optical lattice 106 and the second moving optical lattice 108. At the point of intersection, the atoms trapped in the first moving optical lattice 106 or a part of the trapped atoms are transported to the second moving optical lattice 108, are guided by the second moving optical lattice 108, pass the opening 94a, and are guided to the clock transition space 92 surrounded by the light-shielding wall 94. B The first region(space indicated by the reference numeral 32) is spatially separated from the post device(for example, the clock transition space 92) suppressing spontaneously emitted fluorescence from the first region to reach up to the post device.

According to the first embodiment, the second embodiment, or the alternative configuration thereof described above, atoms can be continuously cooled and continuously output to the post device. As a result, continuous measurement can be realized in the post device.

For example, when the position where the atoms are trapped by the laser beam for the magneto-optical trap and the quadrupole magnetic field, and the position where the laser beam for narrow-line laser cooling is irradiated to the atoms in the $^3P_2$ state are the same position, cold atoms cannot be efficiently obtained. This is due to the following Majonara loss: the atoms in the 3P2 state are cooled, decelerated, and damped the atomic motion towards the center of the quadrupole magnetic field, where the magnetic field is zero; the zero magnetic field allows the Majonara flip so that the atom in an untrapped spin state can escape from the magnetic trap.

On the other hand, according to the first embodiment, the second embodiment, or the alternative configurations, the position where the atoms are trapped by the magneto-optical trap is at the center of the quadrupole magnetic field, and the zero magnetic field. On the other hand, the position where the narrow-line laser cooling is performed is at a position distanced from the center of the quadrupole magnetic field, and, at this position, a finite bias magnetic field is applied, which can prevent the Majonara flip. In other words, the atoms can be trapped in the trap space corresponding to the first region, the trapped atoms can be moved to the position 30 or the local minimum position 66 corresponding to the second region by the force of gravity, the magnetic force, and the radiation pressure by the laser beam 68, and the narrow-line laser cooling can be performed at the position 30 or the local minimum position 66. In this manner, because the trapping of the atoms and the narrow-line laser cooling can be performed at different states and different locations, the trapping of the atoms and the narrow-line laser cooling can be performed continuously. Further, by optically pumping the atoms to the third state to thereby release the cold atoms from the magnetic trap, the cold atom gas can be continuously supplied to the post device using the moving optical lattice or the like, and measurement can be continuously performed in the post device.

As an example of a means that guides the atoms in the third state sufficiently cooled in the second region from the second region to the post device, the moving optical lattice technique has been exemplified. Alternatively, as another guiding means, a method may be considered which uses an optical dipole guide.

<Structure of Optical Lattice Clock>

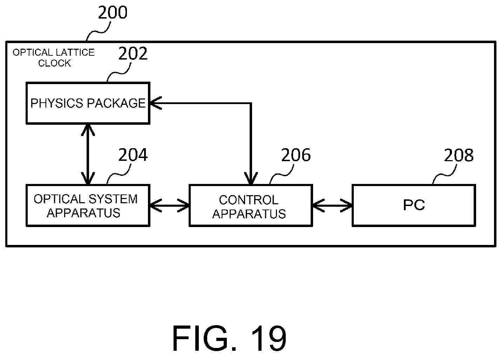

A schematic structure of an optical lattice clock 200 for which the cold atom generation apparatus according to the embodiments of the present disclosure is used will now be described with reference to FIG. 19. FIG. 19 is a block diagram showing an overall structure of the optical lattice clock 200. Here, an optical lattice clock 200 will be described as an example of an apparatus for which the cold atom generation apparatus is used, but alternatively, the cold atom generation apparatus may be used for apparatuses other than the optical lattice clock 200.

The optical lattice clock 200 includes, for example, a physics package 202, an optical system apparatus 204, a control apparatus 206, and a PC (Personal Computer) 208.

The physics package 202 is an apparatus which includes the cold atom generation apparatus according to the first or second embodiment, and which traps an atomic cloud, entraps the atomic cloud in an optical lattice, and causes a clock transition. The optical system apparatus 204 is an apparatus having optical devices such as a laser beam source for cooling atoms, a laser beam source for trapping atoms, a laser beam source for exciting clock transition, a laser frequency control apparatus, and the like. The optical system apparatus 204 applies processes, in addition to sending a laser beam to the physics package 202, to receive a fluorescence signal emitted from the atomic cloud in the physics package 202, to convert the received signal into an electrical signal, and to feed back to the laser beam source so that the frequency matches the resonance frequency of the atom. The control apparatus 206 is an apparatus which controls the physics package 202 and the optical system apparatus 204. The control apparatus 206 applies, for example, operation control of the physics package 202, operation control of the optical system apparatus 204, and an analysis process such as frequency analysis of the clock transition obtained through measurement. The physics package 202, the optical system apparatus 204, and the control apparatus 206 cooperate with each other, to realize the functions of the optical lattice clock 200.

The PC 208 is a general-purpose computer including one or more processors and a memory. Software is executed by hardware including the one or more processors and the memory, to realize the functions of the PC 208. In the PC 208, an application program for controlling the optical lattice clock 200 is installed. The PC 208 is connected to the control apparatus 206, and may control not only the control apparatus 206, but also the entirety of the optical lattice clock 200 including the physics package 202 and the optical system apparatus 204. In addition, the PC 208 provides a UI (User Interface) of the optical lattice clock 200. A user can start the optical lattice clock 200, apply time measurement, and check results through the PC 208.

A system including the physics package 202 and a structure necessary for control of the physics package 202 may sometimes be called a "physics package system". The structure necessary for the control may be included in the control apparatus 206 or in the PC 208, or in the physics package 202. Alternatively, a part or all of the functions of the control apparatus 206 may be included in the physics package 202.

In the physics package 202, the inside of a vacuum chamber is set to be vacuum. As described above with reference to the cold atom generation apparatuses according to the first and second embodiments, the atomic beam emitted from the atomic oven is decelerated by the Zeeman slower, and propagates to the magneto-optical trap apparatus. In the magneto-optical trap apparatus, a magnetic field with a linear spatial gradient, centered at the trap space in which the atoms are trapped, is formed, and the laser beams for magneto-optical trap are irradiated. With this configuration, the atoms are cooled and trapped and the restorative forces from the trap center by the laser cooling. This is called a magneto-optical trap of the atoms. The atoms relaxed to the magnetically trapped state are cooled and trapped in the trap space where the magnetic force, the force of gravity, and the radiation pressure are in equilibrium, using a two- dimensional magnetic guide. The optical lattice beam enters and is reflected by an optical cavity in the vacuum chamber, which forms an optical lattice potential with a series of standing waves in the direction of travel of the optical lattice beam in the trap space. The atomic cloud is trapped in the optical lattice potential.

By slightly detuning frequency between the counter-propagating optical lattice light beams, the optical lattice can be moved in the direction of propagation of the optical lattice light beam. With this moving means by the moving optical lattice, the atomic cloud is moved to a clock transition space. As a result, the clock transition space can be separated from a region exposed to the thermal radiation from the high temperature portion in the atomic beam oven, or from a region exposed to the hot atomic vapor emitted from the atomic beam oven. The separation between the magneto-optical trap and the second trap space suppresses the optical shift of the clock transition in the post device due to spontaneously emitted fluorescence from the magneto-optical trap.

. In the clock transition space, a laser beam with controlled optical frequency is irradiated onto atoms to perform high-precision spectroscopy of clock transitions (i.e. time standard based on atomic the atomic resonance transition) and measure the atom-specific and invariant frequencies. This results in an accurate atomic clock. If there is no need to transport the atomic cloud from the trap space to the clock transition space, spectroscopy may be performed in the trap space.

To improve the accuracy of atomic clocks, the perturbations surrounding the atoms must be eliminated and the frequencies accurately read out. Of particular importance is the elimination of frequency shifts caused by the Doppler effect due to the thermal motion of the atoms. In optical lattice clocks, the motion of the atoms is frozen by confining them in an optical lattice created by the interference of laser beams in a space sufficiently small compared to the wavelength of the clock laser. On the other hand, the frequencies of the atoms in the optical lattice are shifted by the laser beam that forms the optical lattice. Therefore, the effect of the optical lattice on the resonant frequency is removed by choosing a specific wavelength and frequency, called the 'magic wavelength' or 'magic frequency', as the optical lattice beam.

The light emitted as a result of the clock transition is received by the optical system apparatus 204, and spectroscopically processed or the like by the control apparatus 206, to determine the frequency.

In the above description, the optical lattice clock has been exemplified. However, those skilled in the art can apply the technique of the first and second embodiments to structures other than the optical lattice clock. Specifically, the technique may be applied to atomic clocks other than the optical lattice clock, or to an atomic interferometer which is an interferometer using atoms. For example, a physics package for an atomic clock or a physics package for an atomic interferometer including the cold atom generation apparatus of the first or second embodiment may be formed. Further, the present embodiments can be applied to various quantum information processing devices for atoms or ionized atoms. The quantum information processing device is a device which performs measurement, sensing, and information processing using quantum states of atoms and light, and, in addition to the atomic clock and the atomic interferometer, there may be exemplified a magnetic field meter, an electric field meter, a quantum computer, a quantum simulator, a quantum relay, and the like. In a physics package for a quantum information processing device, with the technique of the embodiments, continuous processing can be achieved, similar to the physics package for the optical lattice clock. It should be noted that, in these devices, the clock transition space may be handled not as a space targeted for time measurement, but simply as a space in which clock transition light splitting is caused.

In the description above, a specific configuration has been described in order to facilitate understanding. These descriptions, however, merely exemplify the embodiments, and various other embodiments are also possible.

REFERENCE SIGNS LIST

10, 50 cold atom generation apparatus, 12, 52 atomic oven, 14, 54 Zeeman slower, 16, 56 magneto-optical trap apparatus, 22, 60 magnetic field generator, 24 coil, 26, 62 permanent magnet, 64 stopping coil

**Claims**

1. A cold atom generation apparatus comprising:

   a first cooling means that cools and traps, with a first light and a magnetic field, atoms in a first state in a first region;
   a magnetic trap means that traps, with a magnetic force, atoms optically pumped to a second state;
   a second cooling means that irradiates a second light onto the atoms in the second state moved from the first region to a second region, to thereby cool the atoms in the second state; and
   a supply means that optically pumps, in the second region, the atoms to a third state, insensitive to a magnetic field, and transports the atoms to a post device by a moving optical lattice or an optical dipole guide.

2. The cold atom generation apparatus according to claim 1, wherein

   three axes which are mutually orthogonal are defined, and
   the magnetic trap means moves the atoms from the first region to the second region by forming a magnetic field distribution in which a magnetic field gradient in a direction of one axis among the three axes is weaker than magnetic field gradients of directions of two axes other than the one axis among the three axes.

3. The cold atom generation apparatus according to claim 2, wherein

   the direction of the one axis is a direction in which a force of gravity acts, and
   the second region is a position where the magnetic force, the force of gravity, and a radiation pressure of the second light are in equilibrium.

4. The cold atom generation apparatus according to claim 2, wherein

   the direction of the one axis is a direction in which a radiation pressure from the second light acts, and
   the second region is a position where the magnetic force and the radiation pressure from the second light are in equilibrium.

5. The cold atom generation apparatus according to claim 3, wherein
the magnetic trap means includes a coil and a permanent magnet, and forms the magnetic field distribution by a magnetic field by the coil and a magnetic field by the permanent magnet.

6. The cold atom generation apparatus according to claim 2, wherein
the magnetic trap means includes permanent magnets which form a two-dimensional quadrupole magnetic field on a plane defined by the two axes, and a coil which forms a magnetic field in the direction of the one axis, and forms the magnetic field distribution by a magnetic field by the permanent magnets and a magnetic field by the coil.

7. The cold atom generation apparatus according to any one of claims 1 to 6, wherein
the atoms are strontium atoms.

8. The cold atom generation apparatus according to claim 7, wherein

the first light is a laser beam having a wavelength of 461 nm, and
the first state is the $5s^2\ ^1S_0$ state.

9. The cold atom generation apparatus according to claim 8, wherein

the second light is a laser beam having a wavelength of 2.9 $\mu$m, and
the second state is the $5s5p\ ^3P_2$ state.

10. The cold atom generation apparatus according to claim 5, wherein
the coil and the permanent magnet:

generate, in the first region, a quadrupole magnetic field centered at a zero magnetic field position so that a magneto-optical trap by the first cooling means is realized with respect to the atoms in the first state; and
form, in the second region, a magnetic field distribution so that a sum of a force of gravity acting on the atoms and a radiation pressure of the second light is balanced with a magnetic force acting on the atoms, and
the magnetic field distribution formed in the second region is formed by a non-zero, finite magnetic field, and is a magnetic field distribution which realizes a magnetic trap while preventing the Majonara flip.

11. The cold atom generation apparatus according to claim 1, further comprising:

a light-shielding wall which optically blocks a straight-line path connecting the first region and the post device, wherein
the first region and the second region are formed in a manner to be spatially separated, and
entrance of naturally emitting light generated in the first region into the post device is suppressed by the light-shielding wall.

12. The cold atom generation apparatus according to claim 1, further comprising:

a light-shielding wall which optically blocks the path between the first region and the post device, wherein
the second region and the post device are optically connected to each other by two moving optical lattices which intersect at a non-zero angle,
the supply means transports the atoms to the post device by the two moving optical lattices, and
entrance of naturally emitting light generated in the first region into the post device is suppressed the light-shielding wall.

13. The cold atom generation apparatus according to claim 12, wherein
the two moving optical lattices are formed by a bow-tie cavity.

14. The cold atom generation apparatus according to claim 1, further comprising:

a light-shielding wall that optically blocks the path between the first region and the post device, wherein
the second region and the post device are optically connected with each other by a plurality of moving optical lattices which share intersections and which are lined up,
the supply means transports the atoms to the post device by the plurality of moving optical lattices, and

entrance of naturally emitting light generated in the first region to the post device is suppressed by the light-shielding wall.

15. A cold atom generation apparatus comprising:

a first cooling means that cools and traps, with a first light and a magnetic field, atoms in a first state in a first region;
a means that the atoms trapped in the first region are relaxed to a second state by an optical pump caused during a laser cooling process;
a means that moves the atoms to a second region where a magnetic field is non-zero due to equilibrium between a magnetic force acting on the atoms in the second state, a force of gravity, and a radiation pressure of a second light illuminated onto the atoms in the second state;
a second cooling means that irradiates, in the second region, the second light to the atoms in the second state, to thereby cool the atoms in the second state;
a means that optically pumps the atoms to a third state, insensitive to a magnetic field, in the second region; and
a means that transports the atoms in the third state from the second region to a post device by a moving optical lattice or an optical dipole guide, wherein
the atoms in the first state which are input to the first region are cooled by the first cooling means and are transitioned to the second state,
the atoms in the second state are moved from the first region to the second region by the equilibrium between the magnetic force, the force of gravity, and the radiation pressure from the second light,
a state of the atoms moved to the second region is changed to the third state through an optical pumping manipulation after cooling by the second cooling means, and
the atoms in the third state are trapped in the moving optical lattice of the optical dipole guide, and are transported from the second region to the post device.

16. A method of generating cold atoms, the method comprising:

a first cooling step of cooling and trapping, with a first light and a magnetic field, atoms in a first state in a first region;
a magnetic trap step of trapping, with a magnetic force, atoms optically pumped to a second state;
a step of moving the atoms from the first region to a second region;
a second cooling step of irradiating with a second light onto the atoms in the second state moved from the first region to the second region, to thereby cool the atoms in the second state; and
a supply step of optically pumping the atoms to a third state, insensitive to a magnetic field, in the second region, and transporting the atoms to a post device by a moving optical lattice or an optical dipole guide.

17. The method of generating the cold atoms according to claim 16, wherein

three axes which are mutually orthogonal are defined, and
in the magnetic trap step, a magnetic field distribution is formed in which a magnetic field gradient in a direction of one axis among the three axes is weaker than magnetic field gradients in directions of two axes other than the one axis among the three axes, so that the atoms are moved from the first region to the second region by a force of gravity or a radiation pressure from the second light.

18. A physics package comprising:

the cold atom generation apparatus according to claim 1; and
a vacuum chamber surrounding a clock transition space in which atoms are placed.

19. A physics package for an optical lattice clock, comprising:
the physics package according to claim 18.

20. A physics package for an atomic clock, comprising:
the physics package according to claim 18.

21. A physics package for an atomic interferometer, comprising:
the physics package according to claim 18.

22. A physics package for a quantum information processing device for atoms or ionized atoms, comprising:

the physics package according to claim 18.

23. A physics package system comprising:

the physics package according to claim 18; and
a control apparatus that controls an operation of the physics package.

5s5d $^3D_3$

5s5p $^1P_1$

5s4d $^1D_2$

496 nm

5s4d $^3D_3$

461 nm

5s5p $^3P_2$
$^3P_1$
$^3P_0$

2.9 µm

5s² $^1S_0$

# FIG. 1

| GENERATE ATOM BEAM BY ATOMIC OVEN | A1 |

| COOL ATOMS BY ZEEMAN SLOWER | A2 |

| MOT USING QUASI THREE-DIMENSIONAL QUADRUPOLE MAGNETIC FIELD | A3 |

| MAGNETIC TRAP USING QUASI THREE-DIMENSIONAL QUADRUPOLE MAGNETIC FIELD | A4 |

| MOVE ATOMS USING FORCE OF GRAVITY | A5 |

| NARROW LINE WIDTH COOLING | A6 |

| TRANSPORTED COOLED ATOMS TO THE POST DEVICE | A7 |

# FIG. 2

| GENERATE ATOM BEAM BY ATOMIC OVEN | B1 |

| COOL ATOMS BY ZEEMAN SLOWER | B2 |

| MOT USING TWO-DIMENSIONAL QUADRUPOLE MAGNETIC FIELD | B3 |

| MOVE ATOMS BY MAGNETIC GUIDE | B4 |

| Ioffe-Pritchard TYPE MAGNETIC TRAP | B5 |

| NARROW LINE WIDTH COOLING | B6 |

| TRANSPORTED COOLED ATOMS TO THE POST DEVICE | B7 |

# FIG. 3

FIG. 4

EP 4 550 593 A1

EP 4 550 593 A1

FIG. 5

FIG. 6

EP 4 550 593 A1

FIG. 7

FIG. 8

FIG. 9A

FIG. 9B

FIG. 9C

14a

38

MAGNETIC FLUX

26

MAGNETIC FLUX →→ MAGNETIC FLUX →→ ⊗ FORCE OF GRAVITY

MAGNETIC FLUX

38

## FIG. 9D

14a

38

MAGNETIC FLUX

26

MAGNETIC FLUX →→ MAGNETIC FLUX →→ FORCE OF GRAVITY

MAGNETIC FLUX

38

## FIG. 9E

38

14a

32

28

26

FORCE OF GRAVITY ⊗

38

30

## FIG. 9F

FIG. 9G

EP 4 550 593 A1

FIG. 9H

FIG. 10

EP 4 550 593 A1

FIG. 11

FIG. 12

FIG. 13

FIG. 14

FIG. 15

FORCE APPLIED ON ATOMS BY RADIATION
PRESSURE OF SECOND LIGHT
OR FORCE OF GRAVITY

104

18

102

32

100                    100

106                    108

MOVEMENT DIRECTION OF ATOMS

30

MOVEMENT OF ATOMS
BY MOVING OPTICAL LATTICE

MOVEMENT OF ATOMS
BY MOVING OPTICAL LATTICE

94a

94

92

FIG. 17

FIG. 18

200

OPTICAL LATTICE
CLOCK 202

PHYSICS PACKAGE

204 206 208

OPTICAL SYSTEM
APPARATUS

CONTROL
APPARATUS

PC

# FIG. 19

## INTERNATIONAL SEARCH REPORT

International application No.

**PCT/JP2023/020033**

### A. CLASSIFICATION OF SUBJECT MATTER

**H01S 1/06**(2006.01)i; **G04F 5/14**(2006.01)i; **H01S 3/00**(2006.01)i
FI: H01S1/06; H01S3/00 A; G04F5/14

According to International Patent Classification (IPC) or to both national classification and IPC

### B. FIELDS SEARCHED

Minimum documentation searched (classification system followed by classification symbols)

H01S1/00-1/06; H01S3/00-4/00; H01S5/00-5/50; G04F5/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

IEEE Xplore; Scitation; APS Journals

### C. DOCUMENTS CONSIDERED TO BE RELEVANT

| Category* | Citation of document, with indication, where appropriate, of the relevant passages | Relevant to claim No. |
|---|---|---|
| A | US 2021/0383939 A1 (COLDQUANTA, INC.) 09 December 2021 (2021-12-09) entire text, all drawings | 1-23 |
| A | HOBSON, R. et al. Midinfrared magneto-optical trap of metastable strontium for an optical lattice clock. Physical Review A. 14 January 2020, vol. 101, p. 013420 entire text, all drawings | 1-23 |
| A | KISHIMOTO, T. et al. Electrodynamic Trapping of Spinless Neutral Atoms with an Atom Chip. Physical Review Letters. 31 March 2006, vol. 96, p. 123001 entire text, all drawings | 1-23 |
| A | WO 2014/027637 A1 (RIKEN) 20 February 2014 (2014-02-20) entire text, all drawings | 1-23 |
| A | WO 2022/113717 A1 (JEOL LTD.) 02 June 2022 (2022-06-02) entire text, all drawings | 1-23 |
| A | JP 2021-163884 A (JEOL LTD.) 11 October 2021 (2021-10-11) entire text, all drawings | 1-23 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **26 July 2023** | **08 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/020033**

| Patent document cited in search report | | | Publication date (day/month/year) | Patent family member(s) | | | Publication date (day/month/year) |
|---|---|---|---|---|---|---|---|
| US | 2021/0383939 | A1 | 09 December 2021 | US | 2020/0402681 | A1 | |
| | | | | US | 2020/0161016 | A1 | |
| | | | | US | 2020/0161446 | A1 | |
| | | | | US | 2021/0336032 | A1 | |
| WO | 2014/027637 | A1 | 20 February 2014 | US | 2015/0194972 | A1 | |
| | | | | EP | 2887466 | A1 | |
| WO | 2022/113717 | A1 | 02 June 2022 | (Family: none) | | | |
| JP | 2021-163884 | A | 11 October 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6206973 B
- JP 6635608 B
- JP 7189588 B

- JP 2019129166 A
- JP 2021163884 A

**Non-patent literature cited in the description**

- **HIDETOSHI KATORI**. Longitudinal Ramsey spectroscopy of atoms for continuous operation of optical clocks. *Applied Physics Express*, 2021, vol. 14, 072006
- **MASAMI YASUDA** ; **HIDETOSHI KATORI**. Lifetime Measurement of the P2 Metastable State of Strontium Atoms. *Phys. Rev. Lett.*, 15 April 2004, vol. 92, 153004

- **S. B. NAGEL** ; **C. E. SIMIEN** ; **S. LAHA** ; **P. GUPTA** ; **V. S. ASHOKA** ; **T. C. KILLIAN**. Magnetic trapping of metastable P2 atomic strontium. *PHYSICAL REVIEW A*, 2003, vol. 67, 011401
- **TOMOYA AKATSUKA** ; **KOJI HASHIGUCHI** ; **TADAHIRO TAKAHASHI** ; **NORIAKI OHMAE** ; **MASAO TAKAMOTO** ; **HIDETOSHI KATORI**. Three-stage laser cooling of Sr atoms using the 5s5p P2 metastable state below Doppler temperatures. *PHYSICAL REVIEW A*, 2001, vol. 103, 023331